# EUROPEAN PATENT APPLICATION

(11) **EP 4 561 187 A1**
(43) Date of publication of application: **28.05.2025**
(21) Application number: 22951465.8
(22) Date of filing: 19.07.2022
(51) Int. Cl.: H04W 52/02, H04W 52/14

(54) **POWER HEADROOM REPORTING METHOD BASED ON MULTI-PANEL TRANSMISSION, AND APPARATUS**

(71) Applicant: Beijing Xiaomi Mobile Software Co., Ltd., Beijing 100085 (CN)
(72) Inventor: GAO, Xueyuan, Beijing 100085 (CN)
(74) Representative: Stöckeler, Ferdinand
(86) International application number: PCT/CN2022/106584
(87) International publication number: WO 2024/016187

(57) **Abstract**

Disclosed in embodiments of this disclosure are a power headroom (HP) reporting method based on multi-panel (MP) transmission, and an apparatus, which can be applied to the technical field of communications. The method executed by an MP terminal device comprises: when a terminal device actually transmits a PUSCH on a first transmission time slot corresponding to a PUSCH carrying MAC CE power headroom report (PHR) reporting, or on a time slot satisfying a timeline requirement, the corresponding PUSCH is configured to perform uplink simultaneous transmission via multi-panel (STxMP) of multiple transmission/reception points (TRPs), and the actual transmission of the PUSCH is a transmission from a single panel to a single TRP, calculating and reporting a PHR on the basis of a maximum power configuration of the terminal device and at least according to one actual PH. Therefore, a network device can determine the PH of each panel according to the PHR reported by the multi-panel terminal device, so that accurate resource scheduling is carried out on each panel, and the reliability of uplink transmissions is guaranteed.

## Description

### FIELD

The present disclosure relates to the technical field of communications, and in particular to a power headroom reporting method and apparatus based on multi-panel transmission.

### BACKGROUND

In a multi-transmission and receiving point (Multi-TRP) scenario, it is considered in the release 18 (R18) specification that uplink transmissions are simultaneously performed by using a terminal device with multi-panel to improve the throughput and reliability of the uplink transmissions. For the uplink transmission, the terminal device needs to perform measurement and report a power headroom report (PHR) to a network device, so that the network device can schedule resources according to the PHR. Therefore, how the terminal device with multi-panel reports the PHR is an issue that needs to be solved urgently.

### SUMMARY

Embodiments of the present disclosure provide a power headroom reporting method and apparatus based on multi-panel transmission.

In a first aspect, an embodiment of the present disclosure provides a power headroom reporting method based on multi-panel transmission. The method is performed by a terminal device with multiple panels. The method includes: in response to the terminal device configuring multiple transmission and reception point (multi-TRP) based uplink simultaneous multi-panel transmission (STxMP) for a physical uplink shared channel (PUSCH) on a first transmission slot corresponding to the PUSCH carrying a medium access control control element (MAC CE) PHR report, and an actual PUSCH transmission being a transmission from a single panel towards a single TRP, calculating at least one actual power headroom (PH) and reporting a power headroom report (PHR) based on a maximum power configuration of the terminal device.

In the present disclosure, the terminal device configures multi-TRP uplink STxMP corresponding to the PUSCH on the first transmission slot corresponding to the PUSCH carrying the MAC CE PHR report, or on the slot meeting the timeline requirement, the actual PUSCH transmission is a transmission from a single panel towards a single TRP, and the terminal device calculates at least one actual PH and reports the PHR based on the maximum power configuration. As a result, the network device can determine a PH of each panel based on the PHR reported by the terminal device with multiple panels, thereby accurately scheduling a resource for each panel and ensuring the reliability of uplink transmissions.

In a second aspect, an embodiment of the present disclosure provides a power headroom reporting method based on multi-panel transmission. The method is performed by a network device. The method includes: in response to a terminal device configuring multiple transmission and reception point (multi-TRP) based uplink simultaneous multi-panel transmission (STxMP) for a physical uplink shared channel (PUSCH) on a first transmission slot corresponding to the PUSCH carrying a medium access control control element (MAC CE) PHR report, or on a slot meeting a timeline requirement, and an actual PUSCH transmission being a transmission from a single panel towards a single TRP, determining that a power headroom report (PHR) reported by the terminal device is calculated based on a maximum power configuration of the terminal device and at least one actual PH.

In the present disclosure, when the network device determines that the terminal device configures multi-TRP uplink STxMP for the corresponding PUSCH on the first transmission slot corresponding to the PUSCH carrying the MAC CE PHR report, or on the slot meeting the timeline requirement, and the actual PUSCH transmission is a transmission from a single panel towards a single TRP, the network device determines that the PHR reported by the terminal device is calculated based on the maximum power configuration of the terminal device and at least one actual PH. Therefore, the network device can determine a PH of each panel based on the PHR reported by the terminal device with multiple panels, thereby accurately scheduling a resource for each panel and ensuring the reliability of uplink transmissions.

In a third aspect, an embodiment of the present disclosure provides a communication device, which is applied to a terminal device with multiple panels. The device includes:

a processing module, configured to: in response to the terminal device configuring multiple transmission and reception point (multi-TRP) based uplink simultaneous multi-panel transmission (STxMP) for a physical uplink shared channel (PUSCH) on a first transmission slot corresponding to the PUSCH carrying a medium access control control element (MAC CE) PHR report, or on a slot meeting a timeline requirement, and an actual PUSCH transmission being a transmission from a single panel towards a single TRP, calculate at least one actual PH and report a power headroom report (PHR) based on a maximum power configuration of the terminal device.

In a fourth aspect, an embodiment of the present disclosure provides a communication device, which is applied to a network device. The device includes:
a processing module, configured to: in response to a terminal device configuring multiple transmission and reception point (multi-TRP) based uplink simultaneous multi-panel transmission (STxMP) for a physical uplink shared channel (PUSCH) on a first transmission slot corresponding to the PUSCH carrying a medium access control control element (MAC CE) PHR report, or on a slot meeting a timeline requirement, and an actual PUSCH transmission being a transmission from a single panel towards a single TRP, determine that a power headroom report (PHR) reported by the terminal device is calculated based on a maximum power configuration of the terminal device and at least one actual PH.

In a fifth aspect, an embodiment of the present disclosure provides a communication device. The communication device includes a processor and a memory. A computer program is stored in the memory. The processor is configured to execute the computer program stored in the memory to cause the communication device to perform the method described in the above first aspect.

In a sixth aspect, an embodiment of the present disclosure provides a communication device. The communication device includes a processor and a memory. A computer program is stored in the memory. The processor is configured to execute the computer program stored in the memory to cause the communication device to perform the method described in the above second aspect.

In a seventh aspect, an embodiment of the present disclosure provides a communication device, which includes a processor and an interface circuit. The interface circuit is configured to receive code instructions and transmit them to the processor. The processor is configured to execute the code instructions to cause the device to execute the method described in the above first aspect.

In an eighth aspect, an embodiment of the present disclosure provides a communication device, which includes a processor and an interface circuit. The interface circuit is configured to receive code instructions and transmit them to the processor. The processor is configured to execute the code instructions to cause the device to execute the method described in the above second aspect.

In a ninth aspect, an embodiment of the present disclosure provides a power headroom reporting system based on multi-panel transmission. The system includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect.

In a tenth aspect, an embodiment of the present disclosure provides a computer-readable storage medium, configured to store instructions used by the above-mentioned terminal device. The instructions, when executed, cause the terminal device to execute the method described in the above first aspect.

In an eleventh aspect, an embodiment of the present disclosure provides a computer-readable storage medium, configured to store instructions used by the above-mentioned network device. The instructions, when executed, cause the network device to execute the method described in the above second aspect.

In a twelfth aspect, an embodiment of the present invention provides a computer program product, including a computer program. The computer program, when running on a computer, causes the computer to execute the method described in the above first aspect.

In a thirteenth aspect, an embodiment of the present invention provides a computer program product, including a computer program. The computer program, when running on a computer, causes the computer to execute the method described in the above second aspect.

In a fourteenth aspect, the present disclosure provides a chip system. The chip system includes at least one processor and an interface for supporting the terminal device to implement the functions involved in the first aspect, for example, determining or processing at least one of data or information involved in the above method. In a possible design, the chip system further includes a memory, and the memory is configured to store necessary computer programs and data for the terminal device. The chip system may be composed of chips, or may include a chip and other discrete devices.

In a fifteenth aspect, the present disclosure provides a chip system. The chip system includes at least one processor and an interface for supporting the network device to implement the functions involved in the second aspect, for example, determining or processing at least one of data or information involved in the above method. In a possible design, the chip system further includes a memory, and the memory is configured to store necessary computer programs and data for the network device. The chip system may be composed of chips, or may include a chip and other discrete devices.

In a sixteenth aspect, the present disclosure provides a computer program that, when running on a computer, causes the computer to perform the method described in the above first aspect.

In a seventeenth aspect, the present disclosure provides a computer program that, when running on a computer, causes the computer to perform the method described in the above second aspect.

### BRIEF DESCRIPTION OF THE DRAWINGS

In order to more clearly illustrate the technical solutions in the embodiments of the disclosure or the background technology, the drawings required to be used in the embodiments or the background technology of the disclosure will be described below.
FIG. 1 is a schematic architectural diagram of a communication system provided by an embodiment of the present disclosure.
FIG. 2 is a schematic flowchart of a power headroom reporting method based on multi-panel transmission provided by an embodiment of the present disclosure.
FIG. 3 is a schematic flowchart of another power headroom reporting method based on multi-panel transmission provided by an embodiment of the present disclosure.
FIG. 4 is a schematic flowchart of another power headroom reporting method based on multi-panel transmission provided by an embodiment of the present disclosure.
FIG. 5 is a schematic flowchart of another power headroom reporting method based on multi-panel transmission provided by an embodiment of the present disclosure.
FIG. 6 is a schematic flowchart of another power headroom reporting method based on multi-panel transmission provided by an embodiment of the present disclosure.
FIG. 7 is a schematic flowchart of another power headroom reporting method based on multi-panel transmission provided by an embodiment of the present disclosure.
FIG. 8 is a schematic flowchart of another power headroom reporting method based on multi-panel transmission provided by an embodiment of the present disclosure.
FIG. 9 is a schematic flowchart of another power headroom reporting method based on multi-panel transmission provided by an embodiment of the present disclosure.
FIG. 10 is a schematic flowchart of another power headroom reporting method based on multi-panel transmission provided by an embodiment of the present disclosure.
FIG. 11 is a schematic flowchart of another power headroom reporting method based on multi-panel transmission provided by an embodiment of the present disclosure.
FIG. 12 is a schematic structural diagram of a communication device provided by an embodiment of the present disclosure.
FIG. 13 is a schematic structural diagram of another communication device provided by an embodiment of the present disclosure.
FIG. 14 is a schematic structural diagram of a chip provided by an embodiment of the present disclosure.

### DETAILED DESCRIPTION

For ease of understanding, terminologies involved in the present disclosure will be first introduced.

### 1. Power headroom report (PHR)

PHR reflects the available power of a terminal device, that is, power headroom. In the control of an uplink transmission, PHR needs to be measured and reported to a network device.

A multi-TRP uplink transmission here is mainly related to Type 1 power headroom report, which includes power headroom and maximum transmission power Pcmax on a component carrier, where Pcmax is configured by the network device for the terminal device. Since the network knows a modulation and coding scheme (MCS) at a corresponding time of the power headroom report and the resource size used by the terminal device for transmission, the network can determine an effective combination of the MCS and the allocated resource size. When there is no actual PUSCH transmission, the terminal may also report Type 1 power headroom.

The current PHR measurement mechanism is divided into actual PHR or virtual PHR. When there is a physical uplink shared channel (PUSCH) transmission, the terminal device reports the actual PHR to the network device. When there is no PUSCH transmission, the terminal device calculates a PHR according to a predefined PUSCH format, and transmits it to the network device, that is, reports a virtual PHR. The network device may determine a bandwidth and a transmission mode in which the terminal device can perform a transmission based on power difference information of the terminal device.

### 2. Transmission and receiving point (TRP)

TRP is equivalent to a conventional base station. However, in some cases, a cell may be covered by more than one TRP, and jointly covered by multiple TRPs.

### 3. PUSCH

PUSCH is used to carry data from a transmission channel USCH. The sharing means that one physical channel can be used by multiple terminal devices in a time-sharing manner, or that the channel has a short duration.

### 4. Uplink simultaneous multi-panel transmission (STxMP)

A channel is transmitted/received through multiple beams from multiple angles based on cooperation between multiple panels, which can better overcome various occlusions or blocking effects, so as to ensure the robustness of a link connection.

### 5. Medium access control control element (MAC CE)

MAC CE is a way for a terminal device and a network device to exchange control information, which is mainly about control information of the MAC layer.

In order to better understand a power headroom reporting method based on multi-panel transmission disclosed in embodiments of the present disclosure, a communication system applicable to the embodiments of the present disclosure will be first described below.

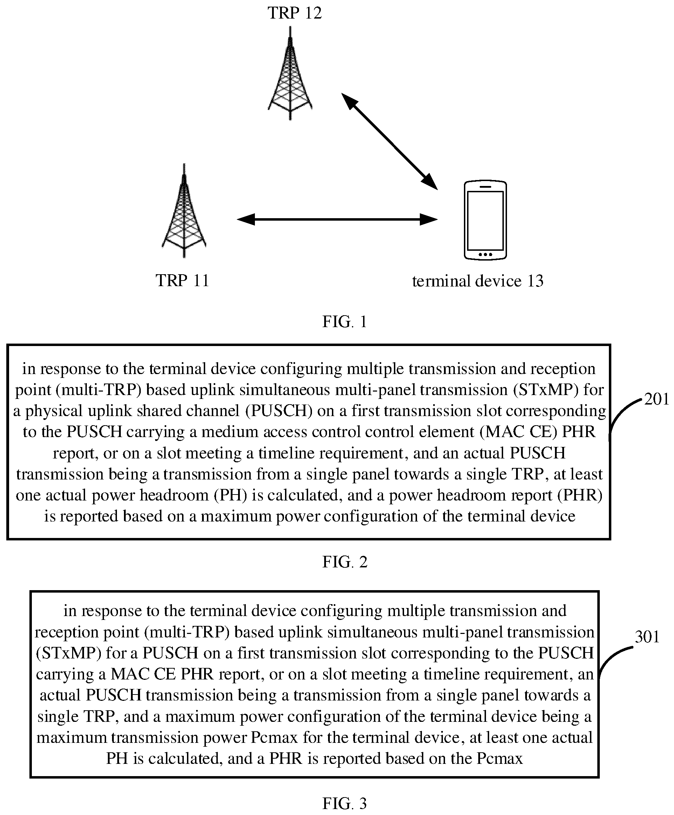

Referring to FIG. 1, FIG. 1 is a schematic architectural diagram of a communication system provided by an embodiment of the present disclosure. The communication system may include, but not limited to, one terminal device and one network device, for example, one TRP. The number and form of devices shown in FIG. 1 are only for examples and do not constitute a limitation onto the embodiments of the present disclosure. In actual applications, the system may include two or more of network devices mentioned above, and two or more of terminal devices mentioned above. The communication system shown in FIG. 1 includes one terminal device 13 and two TRPs including TRP 11 and TRP 12, which is taken as an example.

It should be noted that the technical solutions of the embodiments of the present disclosure may be applied to various communication systems, for example, long term evolved (LTE) system, 5th generation (5G) mobile communication system, 5G new radio (NR) system, or other future new mobile communication systems.

Each of the TRP 11 and the TRP 12 in the embodiments of the present disclosure is an entity on the network side for receiving or transmitting signals, for example, an evolved NodeB (eNB), a transmission reception point (TRP), a next generation NodeB (gNB) in an NR system, a base station in other future mobile communication systems, an access node in a wireless fidelity (WiFi) system, or the like. The specific technique and the specific device form used by the network device are not limited in the embodiments of the present disclosure. The network device provided by the embodiments of the present disclosure may include a centralized unit (CU) and a distributed unit (DU). The CU may also be referred to as a control unit. Protocol layers of the network device, for example, a base station, may be split by means of the structure of CU-DU, where functions of some protocol layers are arranged on the CU for centralized control, some or all of functions of the remaining protocol layers are distributed in the DU, and the CU centrally controls the DU. In the present disclosure, the TRP may also be replaced by a remote radio head, or an antenna panel, or the like.

The terminal device 13 in the embodiments of the present disclosure may be an entity on the user side for receiving or transmitting signals, such as a mobile phone. The terminal device may also be referred to as terminal, user equipment (UE), mobile station (MS), mobile terminal (MT), etc. The terminal device may be a car with communication functions, a smart car, a mobile phone, a wearable device, a tablet computer (Pad), a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in smart city, a wireless terminal device in smart home, etc. The specific technique and the specific device form used by the terminal device are not limited in the embodiments of the present disclosure.

It will be appreciated that the communication system described in the embodiments of the present disclosure is to more clearly illustrate the technical solutions of the embodiments of the present disclosure, and does not constitute a limitation onto the technical solutions provided by the embodiments of the present disclosure. As those of ordinary skill in the art will know, with the evolution of the system architecture and the emergence of new service scenarios, the technical solutions provided by the embodiments of the present disclosure are also applicable to similar technical problems.

In the present disclosure, since each panel of the terminal device has an independent power amplifier (PA) implementation structure, and can support an independent power control process, a maximum transmission power Pcmax may be configured for the terminal device, or a maximum transmission power Pcmax,p corresponding to each panel may also be configured for each panel of the terminal device. Therefore, in the present disclosure, when the terminal device configures multiple transmission and reception point (multi-TRP) based uplink simultaneous multi-panel transmission (STxMP) for a PUSCH on a first transmission slot corresponding to the PUSCH carrying a MAC CE PHR report, or on a slot meeting a timeline requirement, and an actual PUSCH transmission is a transmission from a single panel towards a single TRP, the terminal device can calculate at least one actual PH and report a power headroom report (PHR) based on a maximum power configuration of the terminal device, and then the network device can determine a power headroom (PH) of the terminal device based on the PHR, and can schedule resources for each panel based on the PH, thus ensuring the reliability of uplink transmissions.

It should be noted that in the present disclosure, the power headroom reporting method based on multi-panel transmission provided in any embodiment can be executed alone, or can be executed in combination with a possible implementation method in other embodiments, or in combination with any technical solution in related technologies.

The embodiments of the present disclosure will be further described with reference to the accompanying drawings and specific implementations.

Exemplary embodiments will be described in detail herein, examples of which are illustrated in the accompanying drawings. The following description refers to the accompanying drawings in which the same numbers in different drawings refer to the same or similar elements unless otherwise indicated. The implementations set forth in the following description of illustrative embodiments do not represent all implementations consistent with the embodiments of the present disclosure. They are merely examples of apparatuses and methods consistent with some aspects of the embodiments of the present disclosure as recited in the appended claims.

Terms used in the embodiments of the present disclosure are only for the purpose of describing specific embodiments, and shall not be construed to limit the present disclosure. As used in the embodiments of the present disclosure and the appended claims, "a/an" and "the" in a singular form are intended to include plural forms, unless clearly indicated in the context otherwise. It should be understood that, the term "and/or" used herein represents and contains any one of associated listed items and all possible combinations of more than one associated listed items.

Depending on the context, terms "if" and "in response to" may be construed to mean "when" or "upon" or "in response to determining".

The embodiments of the present disclosure will be described in detail below, and examples of the embodiments are illustrated in the accompanying drawings, where the same or similar reference signs refer to the same or similar elements throughout the specification. The embodiments described below with reference to the accompanying drawings are exemplary and are intended to explain the present disclosure, but should not be construed to limit the present disclosure.

Referring to FIG. 2, FIG. 2 is a schematic flowchart of a power headroom reporting method based on multi-panel transmission provided by an embodiment of the present disclosure. The method is performed by a terminal device with multiple panels. As shown in FIG. 2, the method may include, but not limited to, the following steps.

In step 201, in response to the terminal device configuring multiple transmission and reception point (multi-TRP) based uplink simultaneous multi-panel transmission (STxMP) for a physical uplink shared channel (PUSCH) on a first transmission slot corresponding to the PUSCH carrying a medium access control control element (MAC CE) PHR report, or on a slot meeting a timeline requirement, and an actual PUSCH transmission being a transmission from a single panel towards a single TRP, at least one actual power headroom (PH) is calculated, and a power headroom report (PHR) is reported based on a maximum power configuration of the terminal device.

The first transmission slot corresponding to the PUSCH carrying the MAC CE PHR report may be one of multiple transmission slots corresponding to the PUSCH carrying the MAC CE PHR report determined based on downlink control information (DCI), which has the smallest time-frequency domain position. The slot meeting the timeline requirement may be determined by the terminal device based on a protocol agreement or an indication from a network device, and may meet the timeline requirement of PHR reporting.

In the present disclosure, when performing an uplink transmission, the terminal device needs to report the PHR to the network device, so as to ensure the reliability of the uplink transmission. When the terminal device configures multi-TRP uplink STxMP for the corresponding PUSCH on the first transmission slot corresponding to the PUSCH carrying the MAC CE PHR report, and the actual PUSCH transmission is a transmission from a single panel towards a single TRP; or when the terminal device configures multi-TRP uplink STxMP for the corresponding PUSCH on the slot meeting a timeline requirement, and the actual PUSCH transmission is a transmission from a single panel towards a single TRP, the at least one actual PH is calculated, and the PHR may be reported based on the maximum power configuration of the terminal device and the at least one actual PH.

After the terminal device calculates and reports the PHR, the network device can determine a power headroom of the terminal device based on the PHR, and can accurately determine a bandwidth and a transmission mode in which a panel of the terminal device can performs a transmission in combination with a coding and modulation manner of the terminal device in this case, thereby ensuring the reliability of uplink transmissions.

Optionally, the maximum power configuration of the terminal device may include a maximum transmission power Pcmax for the terminal device, or maximum transmission powers Pcmax,p for different panels, or both the Pcmax and the Pcmax,p, which is not limited by the present disclosure.

The PHR may include an actual PH value calculated based on the maximum transmission power and a power of the actual PUSCH transmission, or may also include a virtual PH value, a field used for indicating a reference format of the virtual PH, etc. The virtual PH is a virtual value calculated based on the maximum transmission power and a predefined PUSCH format. The field used for indicating the reference format of the virtual PH may be used to indicate whether the reported PH value is determined based on an actual transmission or based on the reference format. For example, if a value of the field used for indicating the reference format of the PHR is set to 0, it indicates that the reported PH value is an actual PH value determined based on the actual transmission; and if the value of the field used for indicating the reference format of the PHR is set to 1, it indicates that the reported PH value is a virtual PH value determined based on the reference format.

Optionally, the terminal device may calculate at least one actual PH and report the PHR based on the maximum transmission power Pcmax for the terminal device; or may calculate at least one actual PH and report the PHR based on the maximum transmission powers Pcmax,p for different panels, or may calculate at least one actual PH and report the PHR based on the Pcmax, the Pcmax,p, which is not limited by the disclosure.

Optionally, the terminal device may calculate an actual PH and report at least one actual PHR based on the maximum power configuration of the terminal device, and may calculate a virtual PH and report at least one virtual PHR based on the maximum power configuration of the terminal device.

Optionally, a transmission of the PUSCH transmitted by the terminal device may be scheduled based on a single downlink control information (DCI) in a space division multiplexing (SDM) mode or a frequency division multiplexing (FDM) mode, to implement uplink STxMP on multiple panels. Therefore, when the PUSCH is scheduled based on single-DCI, the reference format of the virtual PHR may be determined according to transmission manners of different panels when one PUSCH is transmitted from multiple panels simultaneously in an SDM or FDM transmission scheme, or other predefined reference channel transmission manners.

Optionally, a PUSCH transmission may be scheduled based on multiple DCIs in an SDM, FDM or time division multiplexing (TDM) mode, to implement uplink STxMP on multiple panels. Therefore, when the PUSCH is scheduled based on multiple DCIs in a cooperative transmission scheme, the reference format of the virtual PHR may be determined based on PUSCH transmission manners of different panels when two PUSCHs are transmitted from multiple panels simultaneously in an SDM or FDM or TDM transmission scheme, or other predefined reference channel transmission manners.

In the present disclosure, when the terminal device configures multi-TRP uplink STxMP for the corresponding PUSCH on the first transmission slot corresponding to the PUSCH carrying the MAC CE PHR report, or on the slot meeting the timeline requirement, and the actual PUSCH transmission is a transmission from a single panel towards a single TRP, the terminal device can calculate a PH based on the maximum power configuration and at least one actual PH, and can report the PHR when a PHR reporting condition is met.

In the present disclosure, when the terminal device configures multi-TRP uplink STxMP for the corresponding PUSCH on the first transmission slot corresponding to the PUSCH carrying the MAC CE PHR report, or on the slot meeting the timeline requirement, and the actual PUSCH transmission is a transmission from a single panel towards a single TRP, the terminal device can calculate at least one actual PH and report the PHR based on the maximum power configuration. As a result, the network device can determine a PH of each panel based on the PHR reported by the terminal device with multiple panels, thereby accurately scheduling a resource for each panel and ensuring the reliability of uplink transmissions.

Referring to FIG. 3, FIG. 3 is a schematic flowchart of a power headroom reporting method based on multi-panel transmission provided by an embodiment of the present disclosure. The method is performed by a terminal device with a multi-panel. As shown in FIG. 3, the method may include, but not limited to, the following steps.

In step 301, in response to the terminal device configuring multiple transmission and reception point (multi-TRP) based uplink simultaneous multi-panel transmission (STxMP) for a PUSCH on a first transmission slot corresponding to the PUSCH carrying a MAC CE PHR report, or on a slot meeting a timeline requirement, an actual PUSCH transmission being a transmission from a single panel towards a single TRP, and a maximum power configuration of the terminal device being a maximum transmission power Pcmax for the terminal device, at least one actual PH is calculated, and a PHR is reported based on the Pcmax.

In the present disclosure, when the maximum power configuration of the terminal device is the Pcmax for the terminal device, the terminal device may allocate the power Pcmax according to a preset power allocation rule, and may calculate and report the PHR according to at least one actual PH.

Optionally, the terminal device may allocate the power Pcmax according to an average allocation rule to determine a maximum transmission power corresponding to each panel. For example, Pcmax is 23 decibel relative to one milliwatt (dBm), the terminal device has two panels, and it may be determined according to the average allocation rule that the maximum transmission power corresponding to each panel is 20 dBm.

Alternatively, the terminal device may perform power allocation on the Pcmax according to a dynamic allocation rule to determine a maximum transmission power corresponding to each panel. The dynamic allocation rule may be indicated by a network device or determined based on a protocol agreement. For example, actual power output capabilities of two panels of the terminal are different, and panel #2 has a larger power amplifier and supports a higher actual transmission power. In this case, the power is dynamically allocated between the two panels based on panel capabilities. For example, a panel capability of panel #1 supports 23 dBm, and a panel capability of panel #2 supports 26 dBm, but the maximum transmission power configuration of the terminal is 26 dBm. In this case, it may be considered that the transmission power is allocated between the two panels in an average manner, or is allocated dynamically between the two panels based on the panel capabilities. For example, a maximum transmission power of panel #2 accounts for 70% of the maximum transmission power of the terminal device. In this case, if the Pcmax for the terminal device is 26 dBm, it may be determined according to the dynamic allocation rule that: when panel#1 occupies 30%, a maximum transmission power corresponding to panel#1 is 21 dBm, and the maximum transmission power corresponding to panel#2 is 24.5 dBm.

In the present disclosure, the PUSCH transmitted by the terminal device is transmitted from a single panel towards a single TRP, and multi-transmission and reception point (multi-TRP) STxMP is configured for the PUSCH, that is, in this case, the network device schedules the terminal to select one of the TRPs for transmitting the PUSCH through the panel. In this case, one panel among the multiple panels of the terminal device transmits a PUSCH, and thus, the terminal device can calculate an actual PHR of the panel that has actually transmitted the PUSCH.

Optionally, the terminal device may calculate and report an actual PHR of a first panel corresponding to the actual PUSCH transmission based on the Pcmax and a power allocation rule. The actual PHR is associated with a transmission occasion corresponding to the actual PUSCH transmission on the first panel.

Alternatively, the terminal device may calculate the actual PH and report an actual PHR of a first panel corresponding to the actual PUSCH transmission based on the Pcmax, a power allocation rule, and may calculate a virtual PH and report a virtual PHR of another panel based on the Pcmax, the power allocation rule, where the actual PHR is associated with a transmission occasion corresponding to the actual PUSCH transmission on the first panel, and the virtual PHR is associated with a transmission occasion corresponding to a PUSCH transmission reference assumption on the other panel.

For example, the terminal device may determine a maximum transmission power corresponding to each panel based on the Pcmax and the power allocation rule, may calculate an actual PH corresponding to the first panel and a virtual PH corresponding to any of the other panels except the first panel, and may report PHRs corresponding to the two panels.

Optionally, a transmission of the PUSCH transmitted by the terminal device may be scheduled based on single-DCI in an SDM manner or an FDM manner, to implement uplink STxMP on multiple panels. Therefore, when the PUSCH is scheduled based on single-DCI, a reference format of the virtual PHR may be determined according to transmission manners of different panels when one PUSCH is transmitted from multiple panels simultaneously in an SDM or FDM transmission scheme, or other predefined reference channel transmission manners.

Optionally, a PUSCH transmission may be scheduled based on multi-DCI in an SDM, FDM or TDM mode, to implement uplink STxMP on multiple panels. Therefore, when the PUSCH is scheduled based on multi-DCI in a cooperative transmission scheme, the reference format of the virtual PHR may be determined based on PUSCH transmission manners of different panels when two PUSCHs are transmitted from multiple panels simultaneously in an SDM or FDM or TDM transmission scheme, or other predefined reference channel transmission manners.

In the present disclosure, for the specific explanation of the PHR, reference can be made to the detailed description of any embodiment of the present disclosure, which will not be described again here.

In the present disclosure, when the terminal device configures multi-TRP uplink STxMP for the PUSCH on the first transmission slot corresponding to the PUSCH carrying the MAC CE PHR report, or on the slot meeting the timeline requirement, and the actual PUSCH transmission is a transmission from a single panel towards a single TRP, and the terminal device can calculate at least one actual PH and report the PHR based on the maximum power configuration of the terminal device. As a result, the network device can determine a PH of each panel based on the PHR reported by the terminal device with multi-panels, thereby accurately scheduling a resource for each panel and ensuring the reliability of uplink transmissions.

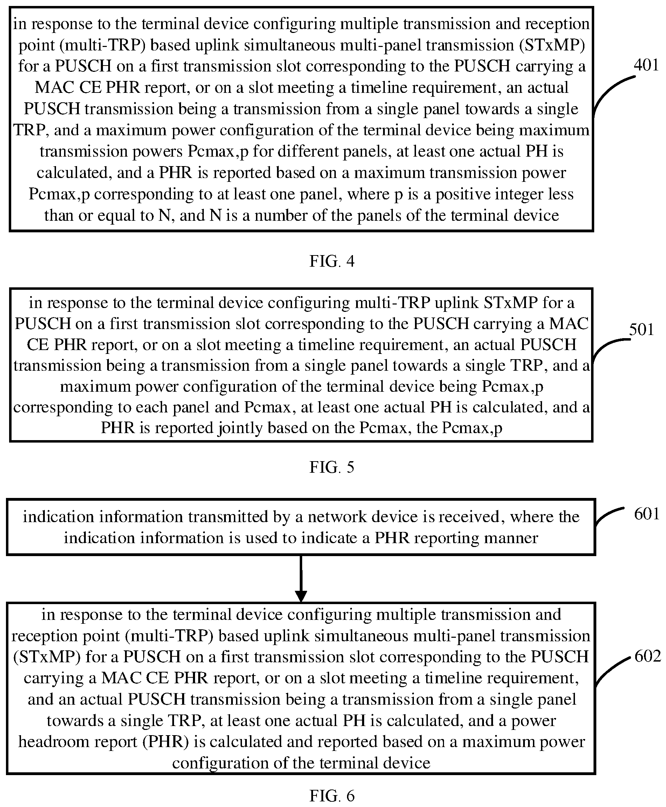

Referring to FIG. 4, FIG. 4 is a schematic flowchart of a power headroom reporting method based on multi-panel transmission provided by an embodiment of the present disclosure. The method is performed by a terminal device with multiple panels. As shown in FIG. 4, the method may include, but not limited to, the following steps.

In step 401, in response to the terminal device configuring multiple transmission and reception point (multi-TRP) based uplink simultaneous multi-panel transmission (STxMP) for a PUSCH on a first transmission slot corresponding to the PUSCH carrying a MAC CE PHR report, or on a slot meeting a timeline requirement, an actual PUSCH transmission being a transmission from a single panel towards a single TRP, and a maximum power configuration of the terminal device being maximum transmission powers Pcmax,p for different panels, at least one actual PH is calculated, and a PHR is calculated and reported based on a maximum transmission power Pcmax,p corresponding to at least one panel, where p is a positive integer less than or equal to N, and N is a number of the panels of the terminal device.

In the present disclosure, when the terminal device configures multi-TRP uplink STxMP for the corresponding PUSCH on the first transmission slot corresponding to the PUSCH carrying the MAC CE PHR report, or on the slot meeting the timeline requirement, the actual PUSCH transmission is a transmission from a single panel towards a single TRP, and the maximum power configuration of the terminal device includes maximum transmission powers Pcmax,p for different panels, the terminal device may calculate the at least one actual PH and report the PHR based on a maximum transmission power Pcmax,p corresponding to at least one panel.

Optionally, the terminal device may calculate and report an actual PHR of a first panel corresponding to the actual PUSCH transmission based on a first Pcmax,p corresponding to the first panel, where the actual PHR is associated with a transmission occasion corresponding to the PUSCH transmission on the first panel.

Alternatively, the terminal device may calculate the actual PH and a virtual PH and report an actual PHR of a first panel and a virtual PHR of another panel based on a first Pcmax,p and a second Pcmax,p corresponding to the other panel, respectively. The actual PHR is associated with a transmission occasion corresponding to the PUSCH transmission on the first panel, and the virtual PHR is associated with a transmission occasion corresponding to a PUSCH transmission reference assumption on the other panel.

The other panel may be any one of the other panels except the first panel.

For example, if the first panel corresponding to the actual PUSCH transmission is panel#1, the terminal device may calculate the actual PH and calculate an actual PHR#1 based on Pcmax,p#1 corresponding to the panel#1 and the actual PH, and may simultaneously calculate the virtual PH and calculate a virtual PHR#2 based on Pcmax,p#2 corresponding to panel#2 and the virtual PH. The PHR#1 is associated with a transmission occasion corresponding to the PUSCH transmission on the panel#1, and the PHR#2 is associated with a transmission occasion corresponding to a PUSCH transmission on the panel#2. The PHR#1 and the PHR#2 are reported to a network device.

Optionally, a transmission of the PUSCH transmitted by the terminal device may be scheduled based on single-DCI in an SDM manner or an FDM manner, to implement uplink STxMP on multiple panels. Therefore, when the PUSCH is scheduled based on single-DCI, a reference format of the virtual PHR may be determined according to transmission manners of different panels when one PUSCH is transmitted from multiple panels simultaneously in an SDM or FDM transmission scheme, or other predefined reference channel transmission manners.

Optionally, a PUSCH transmission may be scheduled based on multi-DCI in an SDM, FDM or TDM mode, to implement uplink STxMP on multiple panels. Therefore, when the PUSCH is scheduled based on multi-DCI in a cooperative transmission scheme, a reference format of the virtual PHR may be determined based on PUSCH transmission manners of different panels when two PUSCHs are transmitted from multiple panels simultaneously in an SDM or FDM or TDM transmission scheme, or other predefined reference channel transmission manners.

In the present disclosure, for the specific explanation of the PHR, reference can be made to the detailed description of any embodiment of the present disclosure, which will not be described again here.

In the present disclosure, the terminal device configures multi-TRP uplink STxMP for the PUSCH on the first transmission slot corresponding to the PUSCH carrying the MAC CE PHR report, or on the slot meeting the timeline requirement, the actual PUSCH transmission is a transmission from a single panel towards a single TRP, the maximum power configuration of the terminal device is maximum transmission powers Pcmax,p for different panels, and the terminal device calculates the at least one actual PH and reports the PHR based on A maximum transmission power Pcmax,p corresponding to at least one panel. In this way, the network device can determine a PH of each panel based on the PHR reported by the terminal device with multi-panels, thereby accurately scheduling a resource for each panel and ensuring the reliability of uplink transmissions.

Referring to FIG. 5, FIG. 5 is a schematic flowchart of a power headroom reporting method based on multi-panel transmission provided by an embodiment of the present disclosure. The method is performed by a terminal device with multiple panels. As shown in FIG. 5, the method may include, but not limited to, the following steps.

In step 501, in response to the terminal device configuring multi-TRP uplink STxMP for a PUSCH on a first transmission slot corresponding to the PUSCH carrying a MAC CE PHR report, or on a slot meeting a timeline requirement, an actual PUSCH transmission being a transmission from a single panel towards a single TRP, and a maximum power configuration of the terminal device being Pcmax,p corresponding to each panel and Pcmax, at least one actual PH is calculated and a PHR is calculated and reported jointly based on the Pcmax, the Pcmax,p.

Optionally, the terminal device may calculate the actual PH and report an actual PHR of a first panel corresponding to the actual PUSCH transmission based on the Pcmax and the actual PH; or the terminal device may calculate the actual PH and report an actual PHR of a first panel corresponding to the actual PUSCH transmission based on a first Pcmax,p corresponding to the first panel and the actual PH.

For example, the terminal device includes panel 1 and panel 2, and the first panel corresponding to the actual PUSCH transmission is the panel 1. A transmission power of the panel 1 is p1, and a transmission power calculated based on a transmission reference assumption of the panel 2 is p2. Actual power headrooms corresponding to the panel 1 calculated based on the actual PH and respectively according to the Pcmax and Pcmax,p1 are PH1 and PH1', respectively; and virtual power headrooms corresponding to the panel 2 calculated based on the virtual PH and respectively according to the Pcmax and Pcmax,p2 are PH2 and PH2', respectively. The terminal device may report PH1 to a network device, or may report PH1' to a network device, which is not limited in the present disclosure.

Optionally, the terminal device may calculate and report two actual PHRs of a first panel corresponding to the actual PUSCH transmission based on the Pcmax and a first Pcmax,p corresponding to the first panel; or, the terminal device may calculate the actual PH and report an actual PHR of a first panel based on the Pcmax and the actual PH, and may calculate a virtual PH and report a virtual PHR of another panel based on the Pcmax and the virtual PH; or, the terminal device may calculate the actual PH and report an actual PHR of a first panel based on a first Pcmax,p and the actual PH, and may calculate a virtual PH and report a virtual PHR of another panel based on a second Pcmax,p corresponding to the other panel and the virtual PH.

That is to say, referring to the above example, the terminal device may report PH1 and PH1' to the network device; or may report PH1 and PH2 to the network device; or may report PH1' and PH2' to the network device.

Optionally, the terminal device may calculate the actual PH and report an actual PHR of a first panel based on a first Pcmax,p and the actual PH, may calculate the actual PH and report another actual PHR of the first panel based on the Pcmax and the actual PH, and may calculate a virtual PH and report a virtual PHR of another panel based on the Pcmax and the virtual PH.

For example, the terminal device includes panel 1 and panel 2, and the first panel corresponding to the actual PUSCH transmission is the panel 1. A transmission power of the panel 1 is p1, and a transmission power calculated based on a transmission reference assumption of the panel 2 is p2. Actual power headrooms corresponding to the panel 1 calculated based on the actual PH and respectively according to the Pcmax and Pcmax,p1 are PH1 and PH1', respectively; and virtual power headrooms corresponding to the panel 2 calculated based on the virtual PH and respectively according to the Pcmax and Pcmax,p2 are PH2 and PH2', respectively. The terminal device may report PH1, PH1' and PH2 to the network device.

Optionally, the terminal device may calculate and report two actual PHRs of a first panel respectively based on a first Pcmax,p corresponding to a first panel and the Pcmax, and may calculate and report a virtual PHR of another panel based on a second Pcmax,p corresponding to the other panel.

That is to say, referring to the above example, the terminal device may report PH1', PH1 and PH2' to the network device.

Optionally, the terminal device may calculate the actual PH and report an actual PHR of a first panel based on a first Pcmax,p and the actual PH, and may calculate and report two virtual PHRs of another panel respectively based on a second Pcmax,p corresponding to the other panel and the Pcmax.

That is to say, referring to the above example, the terminal device may report PH1', PH2 and PH2' to the network device.

Optionally, the terminal device may calculate and report the actual PHR of the first panel based on the Pcmax and the actual PH, and may calculate and report two virtual PHRs of another panel respectively based on the Pcmax and the second Pcmax,p corresponding to the other panel.

That is to say, referring to the above example, the terminal device may report PH1, PH2 and PH2' to the network device.

Optionally, the terminal device may calculate and report an actual PHR of a first panel based on a first Pcmax,p, may calculate and report a virtual PHR of another panel based on a second Pcmax,p, and may calculate and report one PHR corresponding to the terminal device jointly based on the first Pcmax,p, the second Pcmax,p and the Pcmax.

For example, the terminal device includes panel 1 and panel 2, and the first panel corresponding to the actual PUSCH transmission is the panel 1. A transmission power corresponding to the panel 1 is p1, and a transmission power calculated based on a transmission reference assumption of the panel 2 is p2. Actual power headrooms corresponding to the panel 1 calculated based on the actual PH and respectively according to the Pcmax and Pcmax,p1 are PH1 and PH1' respectively; and virtual power headrooms corresponding to the panel 2 calculated based on the virtual PH and respectively according to the Pcmax and Pcmax,p2 are PH2 and PH2' respectively. In addition, the terminal device may determine a transmission power of the terminal device under the multi-panel transmission scheme to be p3 corresponding to the powers p1 and p2, and may obtain PH3 by calculation based on the Pcmax, where the PH3 may be an actual PH or a virtual PH. In this case, the terminal device may report PH1', PH2' and PH3 to the network device.

Optionally, the terminal device may calculate and report two actual PHRs of a first panel respectively based on a first Pcmax,p corresponding to the first panel and the Pcmax, and may calculate and report two virtual PHRs of another panel respectively based on a second Pcmax,p corresponding to the other panel and the Pcmax.

That is to say, referring to the above example, the terminal device may report PH1, PH1', PH2 and PH2' to the network device.

Optionally, the terminal device may calculate and report two actual PHRs of a first panel respectively based on a first Pcmax,p corresponding to the first panel and the Pcmax, may calculate and report two virtual PHRs of another panel respectively based on a second Pcmax,p corresponding to the other panel and the Pcmax, and may calculate and report one PHR corresponding to the terminal device jointly based on the first Pcmax,p, the second Pcmax,p and the Pcmax.

That is to say, referring to the above example, the terminal device may report PH1, PH1', PH2, PH2' and PH3 to the network device.

Each of the above-mentioned actual PHRs is associated with a transmission occasion corresponding to the PUSCH transmission on the first panel, and each of the virtual PHRs is associated with a transmission occasion corresponding to a PUSCH transmission reference assumption on the other panel. In the present disclosure, for the specific explanation of the PHR, reference can be made to the detailed description of any embodiment of the present disclosure, which will not be described again here.

Optionally, a transmission of the PUSCH transmitted by the terminal device may be scheduled based on a single downlink control information (DCI) in a space division multiplexing (SDM) mode or a frequency division multiplexing (FDM) mode, to implement uplink STxMP on multiple panels. Therefore, when the PUSCH is scheduled based on single-DCI, a reference format of the virtual PHR may be determined according to transmission manners of different panels when one PUSCH is transmitted from multiple panels simultaneously in an SDM or FDM transmission scheme, or other predefined reference channel transmission manners.

Optionally, a PUSCH transmission may be scheduled based on multi-DCI in an SDM, FDM or TDM mode, to implement uplink STxMP on multiple panels. Therefore, when the PUSCH is scheduled based on multi-DCI in a cooperative transmission scheme, a reference format of the virtual PHR may be determined based on PUSCH transmission manners of different panels when two PUSCHs are transmitted from multiple panels simultaneously in an SDM or FDM or TDM transmission scheme, or other predefined reference channel transmission manners.

In the present disclosure, the terminal device configures multi-TRP uplink STxMP for the PUSCH on the first transmission slot corresponding to the PUSCH carrying the MAC CE PHR report, or on the slot meeting the timeline requirement, the actual PUSCH transmission is a transmission from a single panel towards a single TRP, the maximum power configuration of the terminal device is a Pcmax,p for a panel and the Pcmax for the terminal device, and the terminal device may calculate the actual PH and report the actual PHR based on the Pcmax,p and the actual PH. In this way, the network device can determine a PH of each panel based on the PHR reported by the terminal device with multiple panels, thereby accurately scheduling a resource for each panel and ensuring the reliability of uplink transmissions.

Referring to FIG. 6, FIG. 6 is a schematic flowchart of a power headroom reporting method based on multi-panel transmission provided by an embodiment of the present disclosure. The method is performed by a terminal device with multiple panels. As shown in FIG. 6, the method may include, but not limited to, the following steps.

In step 601, indication information transmitted by a network device is received, where the indication information is used to indicate a PHR reporting manner.

The PHR reporting manner may include any of the following:
reporting one PHR, reporting two PHRs, reporting three PHRs, reporting four PHRs.

In the present disclosure, the network device may instruct the terminal device how to report the PHR according to a PHR reporting capability of the terminal device. For example, if the PHR reporting capability of the terminal device is reporting four PHRs, the network device may instruct the terminal device to report one PHR, or to report two PHRs, or to report three PHRs, or to report four PHRs.

In step 602, in response to the terminal device configuring multiple transmission and reception point (multi-TRP) based uplink simultaneous multi-panel transmission (STxMP) for a PUSCH on a first transmission slot corresponding to the PUSCH carrying a MAC CE PHR report, or on a slot meeting a timeline requirement, and an actual PUSCH transmission being a transmission from a single panel towards a single TRP, at least one actual PH is calculated, and a power headroom report (PHR) is calculated and reported based on a maximum power configuration of the terminal device.

In the present disclosure, when the network device instructs the terminal device to report one PHR, the terminal device may calculate the actual PH, and report an actual PHR of a first panel corresponding to the actual PUSCH transmission based on the actual PH.

Alternatively, when the network device instructs the terminal device to report two PHRs, the terminal device may calculate and report an actual PHR2 corresponding to a first panel corresponding to the actual PUSCH transmission, and a virtual PHR of another panel; or the terminal device may calculate and report one actual PHR corresponding to a first panel based on a first Pcmax,p corresponding to the first panel, and may calculate and report another actual PHR corresponding to the first panel based on the Pcmax for the terminal device, and a power allocation rule, etc., which is not limited by the present disclosure.

Alternatively, when the network device instructs the terminal device to report three PHRs, the terminal device may calculate and report two actual PHRs of a first panel and one virtual PHR of another panel based on the Pcmax for the terminal device and a Pcmax,p corresponding to the first panel; or the terminal device may calculate and report one actual PHR of a first panel and two virtual PHRs of another panel, etc., which is not limited in the present disclosure.

Alternatively, when the network device may instruct the terminal device to report four PHRs, the terminal device may calculate and report two actual PHRs of a first panel and two virtual PHRs of another panel based on the Pcmax for the terminal device and a Pcmax,p corresponding to the first panel.

In the present disclosure, for the maximum power configuration of the terminal device and the specific explanation of determining and reporting the virtual PHR, reference can be made to the detailed descriptions of any embodiment of the present disclosure, which will not be described again here.

Optionally, a transmission of the PUSCH transmitted by the terminal device may be scheduled based on single-DCI in an SDM manner or an FDM manner, to implement uplink STxMP on multiple panels. Therefore, when the PUSCH is scheduled based on single-DCI, a reference format of the virtual PHR may be determined according to transmission manners of different panels when one PUSCH is transmitted from multiple panels simultaneously in an SDM or FDM transmission scheme, or other predefined reference channel transmission manners.

Optionally, a PUSCH transmission may be scheduled based on multi-DCI in an SDM, FDM or TDM mode, to implement uplink STxMP on multiple panels. Therefore, when the PUSCH is scheduled based on multi-DCI in a cooperative transmission scheme, the reference format of the virtual PHR may be determined based on PUSCH transmission manners of different panels when two PUSCHs are transmitted from multiple panels simultaneously in an SDM or FDM or TDM transmission scheme, or other predefined reference channel transmission manners.

In the present disclosure, after the terminal device receives second indication information transmitted by the network device to indicate the PHR reporting manner, the terminal device configures multiple transmission and reception point (multi-TRP) based uplink simultaneous multi-panel transmission (STxMP) for the corresponding PUSCH on the first transmission slot corresponding to the PUSCH carrying the MAC CE PHR report, or on the slot meeting the timeline requirement, the actual PUSCH transmission is a transmission from a single panel towards a single TRP, and the terminal device calculates at least one actual PH and reports the PHR based on the maximum power configuration of the terminal device and at least one actual PH. As a result, the network device can determine a PH of each panel based on the PHR reported by the terminal device with multiple panels, thereby accurately scheduling a resource for each panel and ensuring the reliability of uplink transmissions.

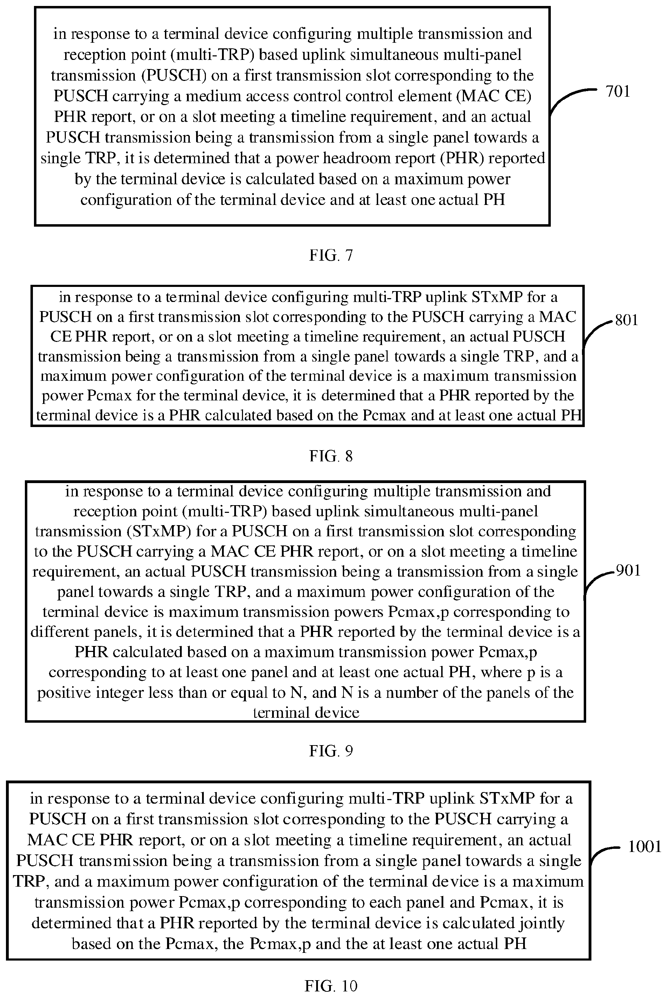

Referring to FIG. 7, FIG. 7 is a schematic flowchart of a power headroom reporting method based on multi-panel transmission provided by an embodiment of the present disclosure. The method is performed by a network device. As shown in FIG. 7, the method may include, but not limited to, the following steps.

In step 701, in response to a terminal device configuring multiple transmission and reception point (multi-TRP) based uplink simultaneous multi-panel transmission (STxMP) for a physical uplink shared channel (PUSCH) on a first transmission slot corresponding to the PUSCH carrying a medium access control control element (MAC CE) PHR report, or on a slot meeting a timeline requirement, and an actual PUSCH transmission being a transmission from a single panel towards a single TRP, it is determined that a power headroom report (PHR) reported by the terminal device is calculated based on a maximum power configuration of the terminal device and at least one actual PH.

The first transmission slot corresponding to the PUSCH carrying the MAC CE PHR report may be one of multiple transmission slots corresponding to the PUSCH carrying the MAC CE PHR report determined based on downlink control information (DCI), which has the smallest time-frequency domain position. The slot meeting the timeline requirement may be determined by the terminal device based on a protocol agreement or an indication from the network device, and may meet the timeline requirement of PHR reporting.

In the present disclosure, when performing an uplink transmission, the terminal device needs to report the PHR to the network device, so as to ensure the reliability of the uplink transmission. When the terminal device configures multi-TRP uplink STxMP for the corresponding PUSCH on the first transmission slot corresponding to the PUSCH carrying the MAC CE PHR report, and the actual PUSCH transmission is a transmission from a single panel towards a single TRP; or when the terminal device configures multi-TRP uplink STxMP for the corresponding PUSCH on the slot meeting a timeline requirement, and the actual PUSCH transmission is a transmission from a single panel towards a single TRP, it may be determined that the PHR reported by the terminal device is a PHR calculated based on the maximum power configuration of the terminal device and at least one actual PH.

After the terminal device calculates and reports the PHR, the network device can determine a power headroom of the terminal device based on the PHR, and can accurately determine a bandwidth and a transmission mode in which a panel of the terminal device performs a transmission in combination with a coding and modulation manner of the terminal device in this case, thereby ensuring the reliability of uplink transmissions.

Optionally, the maximum power configuration of the terminal device may include a maximum transmission power Pcmax for the terminal device, or maximum transmission powers Pcmax,p for different panels, or both the Pcmax and the Pcmax,p, which is not limited by the present disclosure.

The PHR may include an actual PH value calculated based on the maximum transmission power and a power of the actual PUSCH transmission, or may also include a virtual PH value, a field used for indicating a reference format of the virtual PH, etc. The virtual PH is a virtual value calculated based on the maximum transmission power and a predefined PUSCH format. The field used for indicating the reference format of the virtual PH may be used to indicate whether the reported PH value is determined based on an actual transmission or based on the reference format. For example, if a value of the field used for indicating the reference format of the PHR is set to 0, it indicates that the reported PH value is determined based on an actual transmission; and if the value of the field used for indicating the reference format of the PHR is set to 1, it indicates that the reported PH value is determined based on the reference format.

Optionally, in response to the maximum power configuration of the terminal device being a maximum transmission power Pcmax for the terminal device, the network device may determine that the PHR reported by the terminal device is calculated based on the Pcmax and the at least one actual PH;
or in response to the maximum power configuration of the terminal device being maximum transmission powers Pcmax,p for different panels, the network device may determine that the PHR reported by the terminal device is calculated based on a maximum transmission power Pcmax, p corresponding to at least one panel and the at least one actual PH;
or in response to the maximum power configuration of the terminal device being Pcmax and Pcmax, p corresponding to each panel, the network device may determine that the PHR reported by the terminal device is calculated jointly based on the Pcmax, the Pcmax,p, and the at least one actual PH, which is not limited by the present disclosure

Optionally, the terminal device may calculate the actual PH and report at least one actual PHR based on the maximum power configuration of the terminal device and the actual PH, and may calculate a virtual PH and report at least one virtual PHR based on the maximum power configuration of the terminal device and virtual PH.

Optionally, a transmission of the PUSCH transmitted by the terminal device may be scheduled based on a single downlink control information (DCI) in a space division multiplexing (SDM) mode or a frequency division multiplexing (FDM) mode, to implement uplink STxMP on multiple panels. Therefore, when the PUSCH is scheduled based on single-DCI, a reference format of the virtual PHR may be determined according to transmission manners of different panels when one PUSCH is transmitted from multiple panels simultaneously in an SDM or FDM transmission scheme, or other predefined reference channel transmission manners.

Optionally, a PUSCH transmission may be scheduled based on multi-DCI in an SDM, FDM or TDM mode, to implement uplink STxMP on multiple panels. Therefore, when the PUSCH is scheduled based on multi-DCI in a cooperative transmission scheme, the reference format of the virtual PHR may be determined based on PUSCH transmission manners of different panels when two PUSCHs are transmitted from multiple panels simultaneously in an SDM or FDM or TDM transmission scheme, or other predefined reference channel transmission manners.

In the present disclosure, when the terminal device configures multi-TRP uplink STxMP for the PUSCH on the first transmission slot corresponding to the PUSCH carrying the MAC CE PHR report, or on the slot meeting the timeline requirement, and the actual PUSCH transmission is a transmission from a single panel towards a single TRP, the network device can determine that the PHR reported by the terminal device is calculated based on the maximum power configuration of the terminal device and at least one actual PH.

In the present disclosure, when the network device determines that the terminal device configures multi-TRP uplink STxMP for the PUSCH on the first transmission slot corresponding to the PUSCH carrying the MAC CE PHR report, or on the slot meeting the timeline requirement, and the actual PUSCH transmission is a transmission from a single panel towards a single TRP, the network device can determine that the PHR reported by the terminal device is calculated based on the maximum power configuration of the terminal device and at least one actual PH. Therefore, the network device can determine a PH of each panel based on the PHR reported by the terminal device with multiple panels, thereby accurately scheduling a resource for each panel and ensuring the reliability of uplink transmissions.

Referring to FIG. 8, FIG. 8 is a schematic flowchart of a power headroom reporting method based on multi-panel transmission provided by an embodiment of the present disclosure. The method is performed by a network device. As shown in FIG. 8, the method may include, but not limited to, the following steps.

In step 801, in response to a terminal device configuring multi-TRP uplink STxMP for a PUSCH on a first transmission slot corresponding to the PUSCH carrying a MAC CE PHR report, or on a slot meeting a timeline requirement, an actual PUSCH transmission being a transmission from a single panel towards a single TRP, and a maximum power configuration of the terminal device is a maximum transmission power Pcmax for the terminal device, it is determined that a PHR reported by the terminal device is a PHR calculated based on the Pcmax and at least one actual PH.

In the present disclosure, when the maximum power configuration of the terminal device is the Pcmax for the terminal device, the network device may determine that the PHR reported by the terminal device is calculated according to a preset power allocation rule and at least one actual PH.

Optionally, the terminal device may perform power allocation on the Pcmax according to an average allocation rule; or the terminal device may perform power allocation on the Pcmax according to a dynamic allocation rule, where the dynamic allocation rule may be indicated by the network device, or determined based on a protocol agreement, etc., which is not limited by the present disclosure.

For the specific implementation manners of the terminal device performing power allocation based on the power allocation rule and calculating and reporting the PHR, reference can be made to the detailed descriptions of any embodiment of the present disclosure, which will not be described again here.

In the present disclosure, the PUSCH transmitted by the terminal device is transmitted from a single panel to a single TRP, and multi-transmission and reception point (multi-TRP) STxMP is configured for the PUSCH, that is, the network device schedules the terminal to select one of the TRPs for transmitting the PUSCH through the panel in this case. In this case, one panel among the multiple panels of the terminal device transmits a PUSCH, and thus, the network device may determine the PHR reported by the terminal device is an actual PHR of the panel that has actually transmitted the PUSCH and calculated by the terminal device.

Optionally, in the case where the terminal device reports one PHR, the network device may determine that the PHR reported by the terminal device is an actual PHR of a first panel corresponding to the actual PUSCH transmission and calculated by the terminal device based on the Pcmax and a power allocation rule. The actual PHR is associated with a transmission occasion corresponding to the PUSCH transmission on the first panel.

Alternatively, in the case where the terminal device reports two PHRs, the network device may determine that the two PHRs include an actual PHR of a first panel corresponding to the actual PUSCH transmission and calculated by the terminal device based on the Pcmax, a power allocation rule and the actual PH, and a virtual PHR of another panel calculated based on the Pcmax, the power allocation rule, and a virtual PH.

The actual PHR is associated with a transmission occasion corresponding to the PUSCH transmission on the first panel, and the virtual PHR is associated with a transmission occasion corresponding to a PUSCH transmission reference assumption on the other panel.

For example, the terminal device may determine a maximum transmission power corresponding to each panel based on the Pcmax and the power allocation rule, may calculate an actual PH corresponding to the first panel and a virtual PH corresponding to any of the other panels except the first panel, and may report PHRs corresponding to the two panels.

Optionally, a transmission of the PUSCH transmitted by the terminal device may be scheduled based on single-DCI in an SDM manner or an FDM manner, to implement uplink STxMP on multiple panels. Therefore, when the PUSCH is scheduled based on single-DCI, a reference format of the virtual PHR may be determined according to transmission manners of different panels when one PUSCH is transmitted from multiple panels simultaneously in an SDM or FDM transmission scheme, or other predefined reference channel transmission manners.

Optionally, a PUSCH transmission may be scheduled based on multi-DCI in an SDM, FDM or TDM mode, to implement uplink STxMP on multiple panels. Therefore, when the PUSCH is scheduled based on multi-DCI in a cooperative transmission scheme, the reference format of the virtual PHR may be determined based on PUSCH transmission manners of different panels when two PUSCHs are transmitted from multiple panels simultaneously in an SDM or FDM or TDM transmission scheme, or other predefined reference channel transmission manners.

In the present disclosure, for the specific explanation of the PHR, reference can be made to the detailed description of any embodiment of the present disclosure, which will not be described again here.

In the present disclosure, when the terminal device configures multi-TRP uplink STxMP corresponding to the PUSCH on the first transmission slot corresponding to the PUSCH carrying the MAC CE PHR report, or on the slot meeting the timeline requirement, the actual PUSCH transmission is a transmission from a single panel towards a single TRP, and the maximum transmission power for the terminal device is Pcmax, the network device can determine that the PHR reported by the terminal device is calculated based on the Pcmax and at least one PH. As a result, the network device can determine a PH of each panel based on the PHR reported by the terminal device with multiple panels, thereby accurately scheduling a resource for each panel and ensuring the reliability of uplink transmissions.

Referring to FIG. 9, FIG. 9 is a schematic flowchart of a power headroom reporting method based on multi-panel transmission provided by an embodiment of the present disclosure. The method is performed by a network device. As shown in FIG. 9, the method may include, but not limited to, the following steps.

In step 901, in response to a terminal device configuring multiple transmission and reception point (multi-TRP) based uplink simultaneous multi-panel transmission (STxMP) for a PUSCH on a first transmission slot corresponding to the PUSCH carrying a MAC CE PHR report, or on a slot meeting a timeline requirement, an actual PUSCH transmission being a transmission from a single panel towards a single TRP, and a maximum power configuration of the terminal device is maximum transmission powers Pcmax,p corresponding to different panels, it is determined that a PHR reported by the terminal device is a PHR calculated based on a maximum transmission power Pcmax,p corresponding to at least one panel and at least one actual PH, where p is a positive integer less than or equal to N, and N is a number of the panels of the terminal device.

Optionally, in the case where the terminal device reports one PHR, the network device may determine that the one PHR is an actual PHR of a first panel corresponding to the actual PUSCH transmission and calculated by the terminal device based on a first Pcmax,p corresponding to the first panel. The actual PHR is associated with a transmission occasion corresponding to the PUSCH transmission on the first panel.

Alternatively, in the case where the terminal device reports two PHRs, the network device may determine that the two PHRs are an actual PHR of a first panel and a virtual PHR of another panel calculated by the terminal device based on a first Pcmax,p and a second Pcmax,p corresponding to the other panel and respectively according to the actual PH and a virtual PH, where the actual PHR is associated with a transmission occasion corresponding to the PUSCH transmission on the first panel, and the virtual PHR is associated with a transmission occasion corresponding to a PUSCH transmission reference assumption on the other panel.

The other panel may be any of the panels except the first panel.

For example, if the first panel corresponding to the actual PUSCH transmission is panel#1, the terminal device may calculate an actual PHR#1 based on Pcmax,p#1 corresponding to the panel#1, and may simultaneously calculate a virtual PHR#2 based on Pcmax,p#2 corresponding to panel#2. The PHR#1 is associated with a transmission occasion corresponding to the PUSCH transmission on the panel#1, and the PHR#2 is associated with a transmission occasion corresponding to a PUSCH transmission on the panel#2. The PHR#1 and the PHR#2 are reported to the network device.

Optionally, a transmission of the PUSCH transmitted by the terminal device may be scheduled based on single-DCI in an SDM manner or an FDM manner, to implement uplink STxMP on multiple panels. Therefore, when the PUSCH is scheduled based on single-DCI, a reference format of the virtual PHR may be determined according to transmission manners of different panels when one PUSCH is transmitted from multiple panels simultaneously in an SDM or FDM transmission scheme, or other predefined reference channel transmission manners.

Optionally, a PUSCH transmission may be scheduled based on multi-DCI in an SDM, FDM or TDM mode, to implement uplink STxMP on multiple panels. Therefore, when the PUSCH is scheduled based on multi-DCI in a cooperative transmission scheme, a reference format of the virtual PHR may be determined based on PUSCH transmission manners of different panels when two PUSCHs are transmitted from multiple panels simultaneously in an SDM or FDM or TDM transmission scheme, or other predefined reference channel transmission manners.

In the present disclosure, for the specific explanation of the PHR, reference can be made to the detailed description of any embodiment of the present disclosure, which will not be described again here.

In the present disclosure, the terminal device configures multi-TRP uplink STxMP for the corresponding PUSCH on the first transmission slot corresponding to the PUSCH carrying the MAC CE PHR report, or on the slot meeting the timeline requirement, the actual PUSCH transmission is a transmission from a single panel towards a single TRP, the maximum power configuration of the terminal device is Pcmax,p for the panel, and the network device can determine that the PHR reported by the terminal device is calculated based on the Pcmax,p and at least one actual PH. In this way, the network device can determine a PH of each panel based on the PHR reported by the terminal device with multiple panels, thereby accurately scheduling a resource for each panel and ensuring the reliability of uplink transmissions.

Referring to FIG. 10, FIG. 10 is a schematic flowchart of a power headroom reporting method based on multi-panel transmission provided by an embodiment of the present disclosure. The method is performed by a network device. As shown in FIG. 10, the method may include, but not limited to, the following steps.

In step 1001, in response to a terminal device configuring multi-TRP uplink STxMP for a PUSCH on a first transmission slot corresponding to the PUSCH carrying a MAC CE PHR report, or on a slot meeting a timeline requirement, an actual PUSCH transmission being a transmission from a single panel towards a single TRP, and a maximum power configuration of the terminal device is a maximum transmission power Pcmax,p corresponding to each panel and Pcmax, it is determined that a PHR reported by the terminal device is calculated jointly based on the Pcmax, the Pcmax,p and the at least one actual PH.

Optionally, when the terminal device reports one PHR, the network device may determine that the one PHR is an actual PHR of a first panel corresponding to the actual PUSCH transmission and calculated by the terminal device based on the Pcmax and the actual PH; or,

when the terminal device reports one PHR, the network device may determine that the one PHR is an actual PHR of a first panel corresponding to the actual PUSCH transmission and calculated by the terminal device based on a first Pcmax,p corresponding to the first panel and the actual PH.

For example, the terminal device includes panel 1 and panel 2, and the first panel corresponding to the actual PUSCH transmission is the panel 1. When receiving one PHR reported by the terminal device, the network device may determine that the PHR is an actual power headroom PH1 corresponding to the panel 1 calculated by the terminal device based on the Pcmax and the actual PH, or is a PH1' corresponding to the panel 1 calculated by the terminal device based on Pcmax,p 1 corresponding to the panel 1.

Optionally, when the terminal device reports two PHRs, the network device may determine that the two PHRs include two actual PHRs of a first panel corresponding to the actual PUSCH transmission and calculated and reported by the terminal device based on and a first Pcmax,p corresponding to the first panel and the Pcmax. Alternatively, when the terminal device reports two PHRs, the network device may determine that the two PHRs include an actual PHR of a first panel calculated by the terminal device based on the Pcmax and the actual PH, and a virtual PHR of another panel calculated based on the Pcmax and a virtual PH. Alternatively, when the terminal device reports two PHRs, the network device may determine that the two PHRs include an actual PHR of a first panel calculated by the terminal device based on a first Pcmax,p and the actual PH, and a virtual PHR of another panel calculated based on a second Pcmax,p corresponding to the other panel and a virtual PH.

That is to say, referring to the above example, when the terminal device reports two PHRs, the network device may determine that the two PHRs include PH1 and PH1' corresponding to the panel 1; or may include PH1, and a virtual PH2 of the panel 2 calculated based on the Pcmax and the virtual PH; or may include PH1' and a virtual PH2' of the panel 2 calculated based on Pcmax,p2 corresponding to the panel 2.

Optionally, when the terminal device reports three PHRs, the network device may determine that the three PHRs include an actual PHR of a first panel calculated by the terminal device based on a first Pcmax,p and the actual PH, and another actual PHR of the first panel calculated based on the Pcmax and the actual PH, and a virtual PHR of another panel calculated based on the Pcmax and a virtual PH.

Alternatively, when the terminal device reports three PHRs, the network device may determine that the three PHRs include two actual PHRs of a first panel calculated by the terminal device respectively based on the Pcmax and a first Pcmax,p corresponding to the first panel, and a virtual PHR of another panel calculated based on a second Pcmax,p corresponding to the other panel.

Alternatively, when the terminal device reports three PHRs, the network device may determine that the three PHRs include an actual PHR of a first panel calculated by the terminal based on a first Pcmax,p and the actual PH, and two virtual PHRs of another panel calculated respectively based on a second Pcmax,p corresponding to the other panel and the Pcmax.

Alternatively, when the terminal device reports three PHRs, the network device may determine that the three PHRs include an actual PHR of a first panel calculated by the terminal device based on the Pcmax and the actual PH, and two virtual PHRs of another panel calculated respectively based on a second Pcmax,p corresponding to the other panel and the Pcmax.

That is to say, referring to the above example, the three PHRs received by the network device may include PH1, PH1' and PH2, or may include PH1, PH1' and PH2', or may include PH1, PH2' and PH2, or may include PH1', PH2' and PH2, which is not limited in the present disclosure.

Alternatively, when the terminal device reports three PHRs, the network device may determine that the three PHRs include one actual PHR of a first panel calculated by the terminal device based on a first Pcmax,p, one virtual PHR of another panel calculated based on a second Pcmax,p, and one PHR corresponding to the terminal device jointly based on the first Pcmax,p, the second Pcmax,p, and the Pcmax.

For example, the terminal device includes panel 1 and panel 2, and the first panel corresponding to the actual PUSCH transmission is the panel 1. When the terminal device reports three PHRs, it may be determined that the three PHRs include: PH1' calculated by the terminal device based on the Pcmax,p1 and a transmission power p1 of the panel 1, PH2' calculated by the terminal device based on the Pcmax,p2 and a transmission reference assumption of the panel 2, and PH3 calculated based on the Pcmax, p1 and p2 under the multi-panel transmission scheme, where PH3 may be an actual PH or a virtual PH.

Optionally, when the terminal device reports four PHRs, the network device may determine that the four PHRs include two actual PHRs of a first panel calculated by the terminal device respectively based on a first Pcmax,p corresponding to the first panel and the Pcmax, and two virtual PHRs of another panel calculated respectively based on a second Pcmax,p corresponding to the other panel and the Pcmax.

That is to say, referring to the above example, the four PHRs received by the network device include PH1, PH1', PH2 and PH2'.

Optionally, when the terminal device reports five PHRs, the network device may determine that the five PHRs include two actual PHRs of a first panel calculated by the terminal device respectively based on a first Pcmax,p corresponding to the first panel and the Pcmax, two virtual PHRs of another panel calculated respectively based on a second Pcmax,p corresponding to the other panel and the Pcmax, and one PHR corresponding to the terminal device jointly based on the first Pcmax,p, the second Pcmax,p and the Pcmax.

That is to say, referring to the above example, the five PHRs received by the network device may include PH1, PH1', PH2, PH2' and PH3.

The actual PHR is associated with a transmission occasion corresponding to the PUSCH transmission on the first panel, and the virtual PHR is associated with a transmission occasion corresponding to the PUSCH transmission reference assumption on the other panel. In the present disclosure, for the specific explanation of the PHR, reference can be made to the detailed description of any embodiment of the present disclosure, which will not be described again here.

Optionally, a transmission of the PUSCH transmitted by the terminal device may be scheduled based on single-DCI in an SDM manner or an FDM manner, to implement uplink STxMP on multiple panels. Therefore, when the PUSCH is scheduled based on single-DCI, a reference format of the virtual PHR may be determined according to transmission manners of different panels when one PUSCH is transmitted from multiple panels simultaneously in an SDM or FDM transmission scheme, or other predefined reference channel transmission manners.

Optionally, a PUSCH transmission may be scheduled based on multi-DCI in an SDM, FDM or TDM mode, to implement uplink STxMP on multiple panels. Therefore, when the PUSCH is scheduled based on multi-DCI in a cooperative transmission scheme, the reference format of the virtual PHR may be determined based on PUSCH transmission manners of different panels when two PUSCHs are transmitted from multiple panels simultaneously in an SDM or FDM or TDM transmission scheme, or other predefined reference channel transmission manners.

In the present disclosure, the terminal device configures multi-TRP uplink STxMP for the PUSCH on the first transmission slot corresponding to the PUSCH carrying the MAC CE PHR report, or on the slot meeting the timeline requirement, the actual PUSCH transmission is a transmission from a single panel towards a single TRP, the maximum power configuration of the terminal device is Pcmax,p for the panel and Pcmax for the terminal device, and the network device can determine that the PHR reported by the terminal device is calculated based on the Pcmax,p and at least one actual PH. In this way, the network device can determine a PH of each panel based on the PHR reported by the terminal device with multiple panels, thereby accurately scheduling a resource for each panel and ensuring the reliability of uplink transmissions.

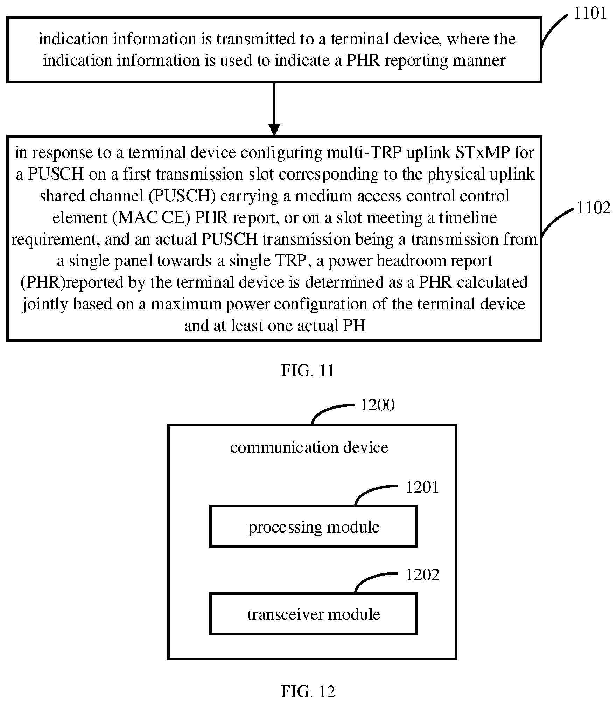

Referring to FIG. 11, FIG. 11 is a schematic flowchart of a power headroom reporting method based on multi-panel transmission provided by an embodiment of the present disclosure. The method is performed by a network device. As shown in FIG. 11, the method may include, but not limited to, the following steps.

In step 1101, indication information is transmitted to a terminal device, where the indication information is used to indicate a PHR reporting manner.

The PHR reporting manner may include any of the following:
reporting one PHR, reporting two PHRs, reporting three PHRs, or reporting four PHRs.

In the present disclosure, the network device may instruct the terminal device how to report the PHR according to a PHR reporting capability of the terminal device. For example, if the PHR reporting capability of the terminal device is reporting four PHRs, the network device may instruct the terminal device to report one PHR, or to report two PHRs, or to report three PHRs, or to report four PHRs.

In the present disclosure, for the specific explanation of the PHR, reference can be made to the detailed description of any embodiment of the present disclosure, which will not be described again here.

In step 1102, in response to a terminal device configuring multi-TRP uplink STxMP for a PUSCH on a first transmission slot corresponding to the physical uplink shared channel (PUSCH) carrying a medium access control control element (MAC CE) PHR report, or on a slot meeting a timeline requirement, and an actual PUSCH transmission being a transmission from a single panel towards a single TRP, a power headroom report (PHR) reported by the terminal device is determined as a PHR calculated based on a maximum power configuration of the terminal device and at least one actual PH.

In the present disclosure, for the specific process of step 1102, reference can be made to the detailed description of any embodiment of the present disclosure, which will not be described again here.

In the present disclosure, after the network device transmits second indication information to the terminal device for indicating a reporting manner of the PHR, the network device determines that the terminal device configures multi-TRP uplink STxMP for the PUSCH on the first transmission slot corresponding to the PUSCH carrying the MAC CE PHR report, or on the slot meeting the timeline requirement, and the actual PUSCH transmission is a transmission from a single panel towards a single TRP, and the network device can determine that the PHR reported by the terminal device is calculated based on the maximum power configuration of the terminal device and at least one actual PH. In this way, the network device can determine a PH of each panel based on the PHR reported by the terminal device with multiple panels, thereby accurately scheduling a resource for each panel and ensuring the reliability of uplink transmissions.

FIG. 12 is a schematic structural diagram of a communication device provided by an embodiment of the present disclosure. The communication device 1200 shown in FIG. 12 may include a processing module 1201 and a transceiver module 1202.

It may be understood that the communication device 1200 may be a terminal device with multi-panels, or may be a device in a terminal device with multi-panels, or may be a device that may be used in conjunction with a terminal device with multi-panels. Alternatively, the communication device 1200 may be a network device, a device in a network device, or a device that may be used in conjunction with the network device.

Optionally, the communication device 1200 is on the side of the terminal device with multi-panels.

The processing module 1201 is configured to: in response to the terminal device configuring multiple transmission and reception point (multi-TRP) based uplink simultaneous multi-panel transmission (STxMP) for a physical uplink shared channel (PUSCH) on a first transmission slot corresponding to the PUSCH carrying a medium access control control element (MAC CE) PHR report, or on a slot meeting a timeline requirement, and an actual PUSCH transmission being a transmission from a single panel towards a single TRP, calculate at least one actual PH and report a power headroom report (PHR) based on a maximum power configuration of the terminal device.

Optionally, the above processing module 1201 is configured to:
in response to the maximum power configuration of the terminal device being a maximum transmission power Pcmax for the terminal device, calculate the at least one actual PH and report the PHR based on the Pcmax; or
in response to the maximum power configuration of the terminal device being maximum transmission powers Pcmax,p for different panels, calculate the at least one actual PH and report the PHR based on a maximum transmission power Pcmax,p corresponding to at least one panel, where p is a positive integer less than or equal to N, and N is a number of the panels of the terminal device; or
in response to the maximum power configuration of the terminal device being Pcmax and Pcmax,p corresponding to each panel, calculate the at least one actual PH and report the PHR jointly based on the Pcmax, the Pcmax,p.

Optionally, the above processing module 1201 is configured to:
calculate the actual PH and report an actual PHR of a first panel corresponding to the actual PUSCH transmission based on the Pcmax, a power allocation rule; or
calculate the actual PH and report an actual PHR of a first panel corresponding to the actual PUSCH transmission based on the Pcmax, a power allocation rule, and calculate a virtual PH and report a virtual PHR of another panel based on the Pcmax, the power allocation rule,
where the actual PHR is associated with a transmission occasion corresponding to the actual PUSCH transmission on the first panel, and the virtual PHR is associated with a transmission occasion corresponding to a PUSCH transmission reference assumption on the other panel.

Optionally, the above processing module 1201 is configured to:
calculate the actual PH and report an actual PHR of a first panel corresponding to the actual PUSCH transmission based on a first Pcmax,p corresponding to the first panel; or
calculate and report an actual PHR of a first panel based on a first Pcmax,p and the actual PH, and calculate and report a virtual PHR of another panel based on a second Pcmax,p corresponding to the other panel and a virtual PH,
where the actual PHR is associated with a transmission occasion corresponding to the actual PUSCH transmission on the first panel, and the virtual PHR is associated with a transmission occasion corresponding to a PUSCH transmission reference assumption on the other panel.

Optionally, the above processing module 1201 is configured to:
calculate the actual PH and report an actual PHR of a first panel corresponding to the actual PUSCH transmission based on the Pcmax; or
calculate the actual PH and report an actual PHR of a first panel corresponding to the actual PUSCH transmission based on a first Pcmax,p corresponding to the first panel; or
calculate and report two actual PHRs of a first panel corresponding to the actual PUSCH transmission based on a first Pcmax,p corresponding to the first panel and the Pcmax; or
calculate the actual PH and report an actual PHR of a first panel corresponding to the actual PUSCH transmission based on the Pcmax, and calculate a virtual PH and report a virtual PHR of another panel based on the Pcmax; or
calculate the actual PH and report an actual PHR of a first panel based on a first Pcmax,p, and calculate a virtual PH and report a virtual PHR of another panel based on a second Pcmax,p corresponding to the other panel; or
calculate the actual PH and report an actual PHR of a first panel based on a first Pcmax,p, calculate the actual PH and report another actual PHR of the first panel based on the Pcmax, and calculate a virtual PH and report a virtual PHR of another panel based on the Pcmax; or
calculate and report two actual PHRs of a first panel respectively based on a first Pcmax,p corresponding to the first panel and the Pcmax, and calculate and report a virtual PHR of another panel based on a second Pcmax,p corresponding to the other panel; or
calculate the actual PH and report an actual PHR of a first panel based on a first Pcmax,p, and calculate and report two virtual PHRs of another panel respectively based on a second Pcmax,p corresponding to the other panel and the Pcmax; or
calculate the actual PH and report an actual PHR of a first panel based on the Pcmax, and calculate and report two virtual PHRs of another panel respectively based on a second Pcmax,p corresponding to the other panel and the Pcmax; or
calculate and report one actual PHR of a first panel based on a first Pcmax,p, calculate and report one virtual PHR corresponding to another panel based on a second Pcmax,p, and calculate and report one PHR corresponding to the terminal device jointly based on the first Pcmax,p, the second Pcmax,p and the Pcmax; or
calculate and report two actual PHRs of a first panel respectively based on a first Pcmax,p corresponding to the first panel and the Pcmax, and calculate and report two virtual PHRs of another panel respectively based on a second Pcmax,p corresponding to the other panel and the Pcmax; or
calculate and report two actual PHRs of a first panel respectively based on a first Pcmax,p corresponding to the first panel and the Pcmax, calculate and report two virtual PHRs of another panel respectively based on a second Pcmax,p corresponding to the other panel and the Pcmax, and calculate and report one PHR corresponding to the terminal device jointly based on the first Pcmax,p, the second Pcmax,p and the Pcmax,
where the actual PHR is associated with a transmission occasion corresponding to the actual PUSCH transmission on the first panel, and the virtual PHR is associated with a transmission occasion corresponding to a PUSCH transmission reference assumption on the other panel.

Optionally, the above processing module 1201 is further configured to:
calculate a virtual PH and report a virtual PHR of another panel based on any one or a specified one of a second Pcmax,p corresponding to the other panel and the Pcmax, where the virtual PHR is associated with a transmission occasion corresponding to a PUSCH transmission reference assumption on the other panel.

Optionally, the above processing module 1201 is further configured to:
in response to the PUSCH being scheduled based on a single downlink control information (DCI), determine a reference format of the virtual PHR based on transmission manners of different panels when one PUSCH is transmitted from the panels in a space division multiplexing (SDM) or frequency division multiplexing (FDM) transmission scheme; or
in response to the PUSCH being scheduled based on multi-DCI, determine a reference format of the virtual PHR based on PUSCH transmission manners of different panels when two PUSCHs are transmitted from the panels in an SDM or FDM or a time division multiplexing (TDM) transmission scheme.

Optionally, the transceiver module 1202 is configured to receive indication information transmitted by a network device, where the indication information is used to indicate a PHR reporting manner;
the above processing module 1201 is further configured to calculate and report the PHR based on the maximum power configuration of the terminal device and the PHR reporting manner.

Optionally, the PHR reporting manner includes any one of:
reporting one PHR, reporting two PHRs, reporting three PHRs, reporting four PHRs.

In the present disclosure, the terminal device configures multi-TRP uplink STxMP for the PUSCH on the first transmission slot corresponding to the PUSCH carrying the MAC CE PHR report, or on the slot meeting the timeline requirement, the actual PUSCH transmission is a transmission from a single panel towards a single TRP, and the terminal device can calculate at least one actual PH and report the PHR based on the maximum power configuration. As a result, the network device can determine a PH of each panel based on the PHR reported by the terminal device with multiple panels, thereby accurately scheduling a resource for each panel and ensuring the reliability of uplink transmissions.

Optionally, the communication device 1200 is on the side of the network device.

The processing module 1201 is configured to: in response to a terminal device configuring multiple transmission and reception point (multi-TRP) based uplink simultaneous multi-panel transmission (STxMP) for a physical uplink shared channel (PUSCH) on a first transmission slot corresponding to the PUSCH carrying a medium access control control element (MAC CE) PHR report, or on a slot meeting a timeline requirement, and an actual PUSCH transmission being a transmission from a single panel towards a single TRP, determine that a power headroom report (PHR) reported by the terminal device is calculated based on a maximum power configuration of the terminal device and at least one actual PH.

Optionally, the above processing module 1201 is configured to:
in response to the maximum power configuration of the terminal device being a maximum transmission power Pcmax for the terminal device, determine that the PHR reported by the terminal device is calculated based on the Pcmax and the at least one actual PH; or
in response to the maximum power configuration of the terminal device being maximum transmission powers Pcmax,p for different panels, determine that the PHR reported by the terminal device is calculated based on A maximum transmission power Pcmax,p corresponding to at least one panel and the at least one actual PH; or
in response to the maximum power configuration of the terminal device being Pcmax and Pcmax,p corresponding to each panel, determine that the PHR reported by the terminal device is calculated jointly based on the Pcmax, the Pcmax,p, and the at least one actual PH.

Optionally, the above processing module 1201 is configured to:
in response to the terminal device reporting one PHR, determine that the one PHR is an actual PHR of a first panel corresponding to the actual PUSCH transmission and calculated by the terminal device based on the Pcmax, a power allocation rule and the actual PH; or
in response to the terminal device reporting two PHRs, determine that the two PHRs are an actual PHR of a first panel corresponding to the actual PUSCH transmission and calculated by the terminal device based on the Pcmax, a power allocation rule and the actual PH, and a virtual PHR of another panel calculated based on the Pcmax, the power allocation rule, and a virtual PH,
where the actual PHR is associated with a transmission occasion corresponding to the actual PUSCH transmission on the first panel, and the virtual PHR is associated with a transmission occasion corresponding to a PUSCH transmission reference assumption on the other panel.

Optionally, the above processing module 1201 is configured to:
in response to the terminal device reporting one PHR, determine that the one PHR is an actual PHR of a first panel corresponding to the actual PUSCH transmission and calculated by the terminal device based on a first Pcmax,p corresponding to the first panel; or
in response to the terminal device reporting two PHRs, determine that the two PHRs include an actual PHR of a first panel calculated by the terminal device based on a first Pcmax,p and the actual PH, and a virtual PHR of another panel calculated based on a second Pcmax,p corresponding to the other panel and a virtual PH,
where the actual PHR is associated with a transmission occasion corresponding to the actual PUSCH transmission on the first panel, and the virtual PHR is associated with a transmission occasion corresponding to a PUSCH transmission reference assumption on the other panel.

Optionally, the above processing module 1201 is configured to:
in response to the terminal device reporting one PHR, determine that the one PHR is an actual PHR of a first panel corresponding to the actual PUSCH transmission and calculated by the terminal device based on the Pcmax and the actual PH; or
in response to the terminal device reporting one PHR, determine that the one PHR is an actual PHR of a first panel corresponding to the actual PUSCH transmission and calculated by the terminal device based on a first Pcmax,p corresponding to the first panel and the actual PH; or
in response to the terminal device reporting two PHRs, determine that the two PHRs include two actual PHRs of a first panel corresponding to the actual PUSCH transmission and calculated by the terminal device based on a first Pcmax,p corresponding to the first panel and the Pcmax; or
in response to the terminal device reporting two PHRs, determine that the two PHRs include an actual PHR of a first panel corresponding to the actual PUSCH transmission and calculated by the terminal device based on the Pcmax and the actual PH, and a virtual PHR of another panel calculated based on the Pcmax and a virtual PH; or
in response to the terminal device reporting two PHRs, determine that the two PHRs include an actual PHR of a first panel calculated by the terminal device based on a first Pcmax,p and the actual PH, and a virtual PHR of another panel calculated based on a second Pcmax,p corresponding to the other panel and a virtual PH; or
in response to the terminal device reporting three PHRs, determine that the three PHRs include an actual PHR of a first panel calculated by the terminal device based on a first Pcmax,p and the actual PH, and another actual PHR of the first panel calculated based on the Pcmax and the actual PH, and a virtual PHR of another panel calculated based on the Pcmax and a virtual PH; or
in response to the terminal device reporting three PHRs, determine that the three PHRs include two actual PHRs of a first panel calculated by the terminal device respectively based on a first Pcmax,p corresponding to the first panel and the Pcmax, and a virtual PHR of another panel calculated based on a second Pcmax,p corresponding to the other panel; or
in response to the terminal device reporting three PHRs, determine that the three PHRs include an actual PHR of a first panel corresponding to the actual PUSCH transmission and calculated by the terminal device based on a first Pcmax,p and the actual PH, and two virtual PHRs of another panel calculated respectively based on a second Pcmax,p corresponding to the other panel and the Pcmax; or
in response to the terminal device reporting three PHRs, determine that the three PHRs include an actual PHR of a first panel calculated by the terminal device based on the Pcmax and the actual PH, and two virtual PHRs of another panel calculated respectively based on a second Pcmax,p corresponding to the other panel and the Pcmax; or
in response to the terminal device reporting three PHRs, determine that the three PHRs include one actual PHR of a first panel calculated by the terminal device based on a first Pcmax,p, one virtual PHR corresponding to another panel calculated based on a second Pcmax,p, and one PHR corresponding to the terminal device calculated jointly based on the first Pcmax,p, the second Pcmax,p and the Pcmax; or
in response to the terminal device reporting four PHRs, determine that the four PHRs include two actual PHRs of a first panel calculated by the terminal device respectively based on a first Pcmax,p corresponding to the first panel and the Pcmax, and two virtual PHRs of another panel calculated respectively based on a second Pcmax,p corresponding to the other panel and the Pcmax; or
in response to the terminal device reporting five PHRs, determine that the five PHRs include two actual PHRs of a first panel calculated by the terminal device respectively based on a first Pcmax,p corresponding to the first panel and the Pcmax, two virtual PHRs of another panel calculated respectively based on a second Pcmax,p corresponding to the other panel and the Pcmax, and one PHR corresponding to the terminal device calculated jointly based on the first Pcmax,p, the second Pcmax,p and the Pcmax,
where the actual PHR is associated with a transmission occasion corresponding to the actual PUSCH transmission on the first panel, and the virtual PHR is associated with a transmission occasion corresponding to a PUSCH transmission reference assumption on the other panel.

Optionally, the above processing module 1201 is configured to:
determine that the PHR reported by the terminal device includes a virtual PHR of another panel calculated by the terminal device according to a virtual PH and based on any one or a specified one of a second Pcmax,p corresponding to the other panel and the Pcmax, where the virtual PHR is associated with a transmission occasion corresponding to a PUSCH transmission reference assumption on the other panel.

Optionally, the above processing module 1201 is configured to:
in response to the PUSCH being scheduled based on a single downlink control information (DCI), determine a reference format of the virtual PHR based on transmission manners of different panels when one PUSCH is transmitted by the terminal device from the panels in a space division multiplexing (SDM) or frequency division multiplexing (FDM) transmission scheme; or
in response to the PUSCH being scheduled based on multi-DCI, determine a reference format of the virtual PHR based on PUSCH transmission manners of different panels when two PUSCHs are transmitted by the terminal device from the panels in an SDM or FDM or a time division multiplexing (TDM) transmission scheme.

Optionally, it further includes:
the transceiver module 1202 is further configured to transmit indication information to the terminal device, where the indication information is used to indicate a PHR reporting manner.

Optionally, the PHR reporting manner includes any of the following:
reporting one PHR, reporting two PHRs, reporting three PHRs, reporting four PHRs.

In the present disclosure, when the terminal device configures multi-TRP uplink STxMP for the corresponding PUSCH on the first transmission slot corresponding to the PUSCH carrying the MAC CE PHR report, or on the slot meeting the timeline requirement, and the actual PUSCH transmission is a transmission from a single panel towards a single TRP, the network device determines that the PHR reported by the terminal device is calculated based on the maximum power configuration of the terminal device and at least one actual PH. Therefore, the network device can determine a PH of each panel based on the PHR reported by the terminal device with multiple panels, thereby accurately scheduling a resource for each panel and ensuring the reliability of uplink transmissions.

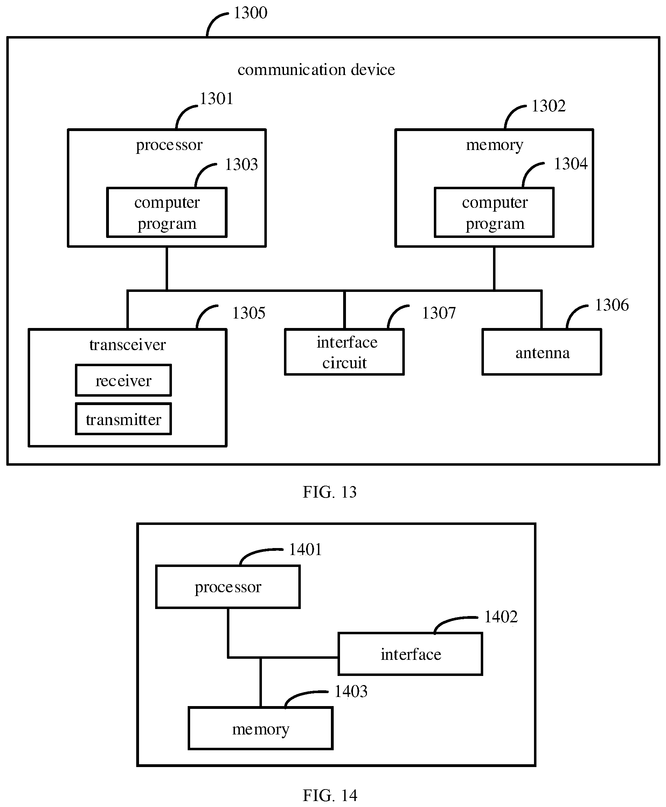

Referring to FIG. 13, FIG. 13 is a schematic structural diagram of another communication device provided by an embodiment of the present disclosure. The communication device 1300 may be a terminal device with multiple panels, a network device, or may be a chip, a chip system, or a processor that supports the terminal device to implement the above method, or may be a chip, a chip system, or a processor that supports the network device to implement the above method. The device can be used to implement the methods described in the above method embodiments. For details, reference can be made to the description in the above method embodiments.

The communication device 1300 may include one or more processors 1301. The processor 1301 may be a general-purpose processor or a special-purpose processor, or the like. For example, the processor may be a baseband processor or a central processing unit. The baseband processor may be used to process communication protocols and communication data. The central processor may be used to control the communication device (such as a base station, a baseband chip, a terminal device, a chip of the terminal device, a DU or a CU, etc.), to execute the computer program, and to process data in the computer program.

Optionally, the communication device 1300 may also include one or more memories 1302, on which a computer program 1304 may be stored. The processor 1301 is configured to execute the computer program 1304 to cause the communication device 1300 to perform the methods described in the above method embodiments. Optionally, the memory 1302 may also store data. The communication device 1300 and the memory 1302 may be arranged separately or integrated together.

Optionally, the communication device 1300 may also include a transceiver 1305 and an antenna 1306. The transceiver 1305 may be referred to as a transceiver unit, a transceiver module, a transceiver circuit, etc., and is configured to implement receiving and transmitting functions. The transceiver 1305 may include a receiver and a transmitter. The receiver may be referred to as a receiver unit or a receiver circuit, etc., and configured to implement receiving function; the transmitter may be referred to as a transmitter unit, a transmitter circuit, etc., and configured to implement the transmitting function.

Optionally, the communication device 1300 may also include one or more interface circuits 1307. The interface circuit 1307 is configured to receive code instructions and transmit them to the processor 1301. The processor 1301 is configured to execute the code instructions to cause the communication device 1300 to perform the methods described in the above method embodiments.

In the case where the communication device 1300 is the terminal device with multiple panels, the processor 1301 is configured to execute steps 201 and 202 in FIG. 2, steps 301 and 302 in FIG. 3, steps 401 and 402 in FIG. 4, steps 501 and 502 in FIG. 5, steps 602 and 603 in FIG. 6, etc. The transceiver 1305 is configured to execute step 601 in FIG. 6, etc.

In the case where the communication device 1300 is the network device, the transceiver 1305 is configured to execute step 1101 in FIG. 11, etc.

In an implementation, the processor 1301 may include a transceiver for implementing receiving and transmitting functions. For example, the transceiver may be a transceiver circuit, an interface, or an interface circuit. The transceiver circuit, the interface or the interface circuit for implementing receiving and transmitting functions may be separated from each other or integrated together. The above-mentioned transceiver circuit, interface or interface circuit may be configured to read and write codes/data, or transmit or transfer signals.

In an implementation, the processor 1301 may store a computer program 1303, and the computer program 1303, when executed by the processor 1301, causes the communication device 1300 to perform the methods described in the above method embodiments. The computer program 1303 may be solidified in the processor 1301, in which case the processor 1301 may be implemented by hardware.

In an implementation, the communication device 1300 may include a circuit, and the circuit can implement the functions of transmitting, receiving, or communicating in the foregoing method embodiments. The processor and the transceiver described in the present disclosure may be implemented in an integrated circuit (IC), an analog IC, a radio frequency integrated circuit (RFIC), a mixed signal IC, an application specific integrated circuits (ASIC), a printed circuit board ( printed circuit board (PCB), electronic equipment, etc. The processor and the transceiver may be manufactured using various IC process techniques, such as complementary metal oxide semiconductor (CMOS), N-channel Metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a remote terminal device, the scope of the communication device described in the present disclosure is not limited thereto, and the structure of the communication device may not be limited by FIG. 13. The communication device may be a stand-alone device or may be a part of a larger device. For example, the communication device may be:
(1) an independent integrated circuit (IC), or chip, or chip system, or subsystem;
(2) a collection of one or more ICs, where, optionally, the IC collection may also include a storage component for storing data and a computer program;
(3)ASIC, such as modem;
(4) a module that can be embedded into other devices;
(5) a receiver, a terminal device, an intelligent terminal device, a cellular phone, a wireless equipment, a handheld device, a mobile unit, a vehicle-mounted equipment, a network device, a cloud equipment, an artificial intelligence equipment, etc.;
(6) other component(s), etc.

For the case where the communication device may be a chip or a chip system, reference may be made to a structural diagram of a chip as shown in FIG. 14. The chip as shown in FIG. 14 includes a processor 1401 and an interface 1402. The number of processors 1401 may be one or multiple, and the number of interfaces 1402 may be multiple.

In the case where the chip is used to implement the functions of the terminal device of multi-panel in the embodiments of the present disclosure,
the interface 1402 is configured to execute step 601 in FIG. 6 and so on.

In the case where the chip is used to implement the functions of the network device in the embodiments of the present disclosure,
the interface 1402 is configured to execute step 1101 in FIG. 11 and so on.

Optionally, the chip 1400 further includes a memory 1403, and the memory 1403 is used to store necessary computer programs and data.

Those skilled in the art can also understand that various illustrative logical blocks and steps listed in the embodiments of the present disclosure can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present disclosure.

The present disclosure further provides a readable storage medium, on which instructions are stored. When the instructions are executed by a computer, functions of any of the above method embodiments are implemented.

The present disclosure further provides a computer program product. The computer program product is executed by a computer to implement functions of any of the above method embodiments.

The above embodiments may be implemented in whole or in part by software, hardware, firmware, or any combination thereof. When implemented by software, it may be implemented in whole or in part in the form of a computer program product. The computer program product includes one or more computer programs. When the computer program is loaded and executed by a computer, the processes or functions described in the embodiments of the present disclosure are generated in whole or in part. The computer may be a general-purpose computer, a special-purpose computer, a computer network, or other programmable device. The computer program may be stored in or transferred from one computer-readable storage medium to another computer-readable storage medium. For example, the computer program may be transferred from a website, a computer, a server, or a data center to another website, computer, server or data center to another website, a computer, a server, or a data center to another website, computer, server or data center through wired means (such as coaxial cable, optical fiber, digital subscriber line (DSL)) or wireless means (such as infrared, wireless, microwave, etc.). The computer-readable storage medium may be any available medium that can be accessed by a computer or a data storage device integrated by one or more available media, which includes a server, a data center, and so on. The available media may be magnetic media (e.g., floppy disk, hard disk, magnetic tape), optical media (e.g., high-density digital video discs (DVD)), or semiconductor media (e.g., solid state disk (SSD)) etc.

Those of ordinary skill in the art may appreciate that numerical numbers such as first and second involved in the present disclosure are only for convenience of description, and are not used to limit the scope of the embodiments of the present disclosure, or to indicate the order.

At least one in the present disclosure may also be described as one or more, and the plurality may be two, three, four or more, which are not limited by the present disclosure. In the embodiments of the present disclosure, technical features are distinguished by terms "first", "second", "third", "A", "B", "C", and "D", etc. The technical features described by the terms "first", "second", "third", "A", "B", "C" and "D" are not in an order of precedence or in an order of size.

The corresponding relationships shown in each table in the present disclosure can be configured or predefined. The values of the information in each table are only examples and can be configured as other values, which is not limited by the present disclosure. When the correspondence between information and each parameter is configured, it is not necessarily required to configure all the correspondences shown in each table. For example, in the table in the present disclosure, the correspondences shown in some rows may not be configured. For another example, appropriate form adjustments can be made based on the above table, such as splitting, merging, etc. The names of the parameters shown in the titles of the above tables may also be other names understandable by the communication apparatus, and the values or expressions of the parameters may also be other values or expressions understandable by the communication apparatus. When implementing the above tables, other data structures can also be used, such as array, queue, container, stack, linear list, pointer, linked list, tree, graph, structure, class, heap, distributed table or hash table.

The term predefined in the present disclosure may be understood as defined, predefined, storage, pre-storage, pre-negotiation, pre-configuration, solidification, or pre-burning.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solution. Those of ordinary skill in the art may implement the described functionality using different methods for each specific application, but such implementations should not be considered as exceeding the scope of the present disclosure.

Those of ordinary skill in the art can clearly understand that for the convenience and simplicity of description, reference may be made to the corresponding processes in the foregoing method embodiments for the specific working processes of the systems, devices and units described above, which will not be described again here.

The above embodiments are only specific implementations of the present disclosure, but the protection scope of the present disclosure is not limited thereto. Changes or substitutions easily occurring to any person familiar with the technical field within the technical scope disclosed in the present disclosure shall fall within the protection scope of the present disclosure. Therefore, the protection scope of the present disclosure should be subject to the protection scope of the claims.

## Claims

1. A power headroom reporting method based on multi-panel transmission, performed by a terminal device with a plurality of panels, comprising:
in response to the terminal device configuring multiple transmission and reception point (multi-TRP) based uplink simultaneous multi-panel transmission (STxMP) for a physical uplink shared channel (PUSCH) on a first transmission slot corresponding to the PUSCH carrying a medium access control control element (MAC CE) PHR report, or on a slot meeting a timeline requirement, and an actual PUSCH transmission being a transmission from a single panel towards a single TRP, calculating at least one actual power headroom (PH) and reporting a power headroom report (PHR) based on a maximum power configuration of the terminal device.

2. The method according to claim 1, wherein calculating at least one actual power headroom (PH) and reporting the power headroom report (PHR) based on the maximum power configuration of the terminal device comprises:
in response to the maximum power configuration of the terminal device being a maximum transmission power Pcmax for the terminal device, calculating the at least one actual PH and reporting the PHR based on the Pcmax; or
in response to the maximum power configuration of the terminal device being maximum transmission powers Pcmax,p for different panels, calculating the at least one actual PH and reporting the PHR based on a maximum transmission power Pcmax,p corresponding to at least one panel, wherein p is a positive integer less than or equal to N, and N is a number of the panels of the terminal device; or
in response to the maximum power configuration of the terminal device being Pcmax and Pcmax,p corresponding to each panel, calculating the at least one actual PH and reporting the PHR jointly based on the Pcmax, the Pcmax,p.

3. The method according to claim 2, wherein calculating the at least one actual PH and reporting the PHR based on the Pcmax comprises:
calculating the actual PH and reporting an actual PHR of a first panel corresponding to the actual PUSCH transmission based on the Pcmax, a power allocation rule; or
calculating the actual PH and reporting an actual PHR of a first panel corresponding to the actual PUSCH transmission based on the Pcmax, a power allocation rule, and calculating a virtual PH and reporting a virtual PHR of another panel based on the Pcmax, the power allocation rule,
wherein the actual PHR is associated with a transmission occasion corresponding to the actual PUSCH transmission on the first panel, and the virtual PHR is associated with a transmission occasion corresponding to a PUSCH transmission reference assumption on the other panel.

4. The method according to claim 2, wherein calculating the at least one actual PH and reporting the PHR based on the Pcmax,p corresponding to the at least one panel comprises:
calculating the actual PH and reporting an actual PHR of a first panel corresponding to the actual PUSCH transmission based on a first Pcmax,p corresponding to the first panel; or
calculating the actual PH and reporting an actual PHR of a first panel based on a first Pcmax,p, and calculating a virtual PH and reporting a virtual PHR of another panel based on a second Pcmax,p corresponding to the other panel,
wherein the actual PHR is associated with a transmission occasion corresponding to the actual PUSCH transmission on the first panel, and the virtual PHR is associated with a transmission occasion corresponding to a PUSCH transmission reference assumption on the other panel.

5. The method according to claim 2, wherein calculating the at least one actual PH and reporting the PHR jointly based on the Pcmax, the Pcmax,p comprises:
calculating the actual PH and reporting an actual PHR of a first panel corresponding to the actual PUSCH transmission based on the Pcmax; or
calculating the actual PH and reporting an actual PHR of a first panel corresponding to the actual PUSCH transmission based on a first Pcmax,p corresponding to the first panel; or
calculating and reporting two actual PHRs of a first panel corresponding to the actual PUSCH transmission based on a first Pcmax,p corresponding to the first panel and the Pcmax; or
calculating the actual PH and reporting an actual PHR of a first panel corresponding to the actual PUSCH transmission based on the Pcmax, and calculating a virtual PH and reporting a virtual PHR of another panel based on the Pcmax; or
calculating the actual PH and reporting an actual PHR of a first panel based on a first Pcmax,p, and calculating a virtual PH and reporting a virtual PHR of another panel based on a second Pcmax,p corresponding to the other panel; or
calculating the actual PH and reporting an actual PHR of a first panel based on a first Pcmax,p, calculating the actual PH and reporting another actual PHR of the first panel based on the Pcmax, and calculating a virtual PH and reporting a virtual PH of another panel based on the Pcmax; or
calculating and reporting two actual PHRs of a first panel respectively based on a first Pcmax,p corresponding to the first panel and the Pcmax, and calculating and reporting a virtual PHR of another panel based on a second Pcmax,p corresponding to the other panel; or
calculating the actual PH and reporting an actual PHR of a first panel based on a first Pcmax,p, and calculating and reporting two virtual PHRs of another panel respectively based on a second Pcmax,p corresponding to the other panel and the Pcmax; or
calculating the actual PH and reporting an actual PHR of a first panel based on the Pcmax, and calculating and reporting two virtual PHRs of another panel respectively based on a second Pcmax,p corresponding to the other panel and the Pcmax; or
calculating and reporting one actual PHR of a first panel based on a first Pcmax,p, calculating and reporting one virtual PHR corresponding to another panel based on a second Pcmax,p, and calculating and reporting one PHR corresponding to the terminal device jointly based on the first Pcmax,p, the second Pcmax,p and the Pcmax; or
calculating and reporting two actual PHRs of a first panel respectively based on a first Pcmax,p corresponding to the first panel and the Pcmax, and calculating and reporting two virtual PHRs of another panel respectively based on a second Pcmax,p corresponding to the other panel and the Pcmax; or
calculating and reporting two actual PHRs of a first panel respectively based on a first Pcmax,p corresponding to the first panel and the Pcmax, calculating and reporting two virtual PHRs of another panel respectively based on a second Pcmax,p corresponding to the other panel and the Pcmax, and calculating and reporting one PHR corresponding to the terminal device jointly based on the first Pcmax,p, the second Pcmax,p and the Pcmax,
wherein the actual PHR is associated with a transmission occasion corresponding to the actual PUSCH transmission on the first panel, and the virtual PHR is associated with a transmission occasion corresponding to a PUSCH transmission reference assumption on the other panel.

6. The method according to any one of claims 3 to 5, further comprising:
in response to the PUSCH being scheduled based on a single downlink control information (DCI), determining a reference format of the virtual PHR based on transmission manners of different panels when one PUSCH is transmitted from the panels in a space division multiplexing (SDM) or frequency division multiplexing (FDM) transmission scheme; or
in response to the PUSCH being scheduled based on multi-DCI, determining a reference format of the virtual PHR based on PUSCH transmission manners of different panels when two PUSCHs are transmitted from the panels in an SDM or FDM or time division multiplexing (TDM) transmission scheme.

7. The method according to any one of claims 1 to 6, further comprising:
receiving indication information transmitted by a network device, wherein the indication information is used to indicate a PHR reporting manner; and
calculating and reporting the PHR based on the maximum power configuration of the terminal device and the PHR reporting manner.

8. The method according to claim 7, wherein the PHR reporting manner comprises any one of:
reporting one PHR, reporting two PHRs, reporting three PHRs, reporting four PHRs, or reporting five PHRs.

9. A power headroom reporting method based on multi-panel transmission, performed by a network device, comprising:
in response to a terminal device configuring multiple transmission and reception point (multi-TRP) based uplink simultaneous multi-panel transmission (STxMP) for a physical uplink shared channel (PUSCH) on a first transmission slot corresponding to the PUSCH carrying a medium access control control element (MAC CE) PHR report, or on a slot meeting a timeline requirement, and an actual PUSCH transmission being a transmission from a single panel towards a single TRP, determining that a power headroom report (PHR) reported by the terminal device is calculated based on a maximum power configuration of the terminal device and at least one actual power headroom (PH).

10. The method according to claim 9, wherein determining that the power headroom report (PHR) reported by the terminal device is calculated based on the maximum power configuration of the terminal device and the at least one actual power headroom (PH) comprises:
in response to the maximum power configuration of the terminal device being a maximum transmission power Pcmax for the terminal device, determining that the PHR reported by the terminal device is calculated based on the Pcmax and the at least one actual PH; or
in response to the maximum power configuration of the terminal device being maximum transmission powers Pcmax,p for different panels, determining that the PHR reported by the terminal device is calculated based on a maximum transmission power Pcmax,p corresponding to at least one panel and the at least one actual PH; or
in response to the maximum power configuration of the terminal device being Pcmax and Pcmax,p corresponding to each panel, determining that the PHR reported by the terminal device is calculated jointly based on the Pcmax, the Pcmax,p, and the at least one actual PH.

11. The method according to claim 10, wherein determining that the PHR reported by the terminal device is calculated based on the Pcmax and the at least one actual power headroom (PH) comprises:
in response to the terminal device reporting one PHR, determining that the one PHR is an actual PHR of a first panel corresponding to the actual PUSCH transmission and calculated by the terminal device based on the Pcmax, a power allocation rule and the actual PH; or
in response to the terminal device reporting two PHRs, determining that the two PHRs are an actual PHR of a first panel corresponding to the actual PUSCH transmission and calculated by the terminal device based on the Pcmax, a power allocation rule and the actual PH, and a virtual PHR of another panel calculated based on the Pcmax, the power allocation rule, and a virtual PH,
wherein the actual PHR is associated with a transmission occasion corresponding to the actual PUSCH transmission on the first panel, and the virtual PHR is associated with a transmission occasion corresponding to a PUSCH transmission reference assumption on the other panel.

12. The method according to claim 10, wherein determining that the PHR reported by the terminal device is calculated based on the Pcmax,p corresponding to the at least one panel and the at least one actual power headroom (PH) comprises:
in response to the terminal device reporting one PHR, determining that the one PHR is an actual PHR of a first panel corresponding to the actual PUSCH transmission and calculated by the terminal device based on a first Pcmax,p corresponding to the first panel; or
in response to the terminal device reporting two PHRs, determining that the two PHRs comprise an actual PHR calculated by the terminal device based on a first Pcmax,p and the actual PH, and a virtual PHR of another panel calculated based on a second Pcmax,p corresponding to the other panel and a virtual PH,
wherein the actual PHR is associated with a transmission occasion corresponding to the actual PUSCH transmission on the first panel, and the virtual PHR is associated with a transmission occasion corresponding to a PUSCH transmission reference assumption on the other panel.

13. The method according to claim 10, wherein determining that the PHR reported by the terminal device is calculated jointly based on the Pcmax, the Pcmax,p, and the at least one actual power headroom (PH) comprises:
in response to the terminal device reporting one PHR, determining that the one PHR is an actual PHR of a first panel corresponding to the actual PUSCH transmission and calculated by the terminal device based on the Pcmax and the actual PH; or
in response to the terminal device reporting one PHR, determining that the one PHR is an actual PHR of a first panel corresponding to the actual PUSCH transmission and calculated by the terminal device based on a first Pcmax,p corresponding to the first panel and the actual PH; or
in response to the terminal device reporting two PHRs, determining that the two PHRs comprise two actual PHRs of a first panel corresponding to the actual PUSCH transmission and calculated by the terminal device based on a first Pcmax,p corresponding to the first panel and the Pcmax; or
in response to the terminal device reporting two PHRs, determining that the two PHRs comprise an actual PHR of a first panel corresponding to the actual PUSCH transmission and calculated by the terminal device based on the Pcmax and the actual PH, and a virtual PHR of another panel calculated based on the Pcmax and a virtual PH; or
in response to the terminal device reporting two PHRs, determining that the two PHRs comprise an actual PHR of a first panel calculated by the terminal device based on a first Pcmax,p and the actual PH, and a virtual PHR of another panel calculated based on a second Pcmax,p corresponding to the other panel and a virtual PH; or
in response to the terminal device reporting three PHRs, determining that the three PHRs comprise an actual PHR of a first panel calculated by the terminal device based on a first Pcmax,p and the actual PH, and another actual PHR of the first panel calculated based on the Pcmax and the actual PH, and a virtual PH of another panel calculated based on the Pcmax and a virtual PH; or
in response to the terminal device reporting three PHRs, determining that the three PHRs comprise two actual PHRs of a first panel calculated by the terminal device respectively based on a first Pcmax,p corresponding to the first panel and the Pcmax, and a virtual PHR of another panel calculated based on a second Pcmax,p corresponding to the other panel; or
in response to the terminal device reporting three PHRs, determining that the three PHRs comprise an actual PHR of a first panel corresponding to the actual PUSCH transmission and calculated by the terminal device based on a first Pcmax,p and the actual PH, and two virtual PHRs of another panel calculated respectively based on a second Pcmax,p corresponding to the other panel and the Pcmax; or
in response to the terminal device reporting three PHRs, determining that the three PHRs comprise an actual PHR of a first panel calculated by the terminal device based on the Pcmax and the actual PH, and two virtual PHRs of another panel calculated respectively based on a second Pcmax,p corresponding to the other panel and the Pcmax; or
in response to the terminal device reporting three PHRs, determining that the three PHRs comprise one actual PHR of a first panel calculated by the terminal device based on a first Pcmax,p, one virtual PHR corresponding to another panel calculated based on a second Pcmax,p, and one PHR corresponding to the terminal device calculated jointly based on the first Pcmax,p, the second Pcmax,p and the Pcmax; or
in response to the terminal device reporting four PHRs, determining that the four PHRs comprise two actual PHRs of a first panel calculated by the terminal device respectively based on a first Pcmax,p corresponding to the first panel and the Pcmax, and two virtual PHRs of another panel calculated respectively based on a second Pcmax,p corresponding to the other panel and the Pcmax; or
in response to the terminal device reporting five PHRs, determining that the five PHRs comprise two actual PHRs of a first panel calculated by the terminal device respectively based on a first Pcmax,p corresponding to the first panel and the Pcmax, two virtual PHRs of another panel calculated respectively based on a second Pcmax,p corresponding to the other panel and the Pcmax, and one PHR corresponding to the terminal device calculated jointly based on the first Pcmax,p, the second Pcmax,p and the Pcmax,
wherein the actual PHR is associated with a transmission occasion corresponding to the actual PUSCH transmission on the first panel, and the virtual PHR is associated with a transmission occasion corresponding to a PUSCH transmission reference assumption on the other panel.

14. The method according to any one of claims 11 to 13, further comprising:
in response to the PUSCH being scheduled based on a single downlink control information (DCI), determining a reference format of the virtual PHR based on transmission manners of different panels when one PUSCH is transmitted by the terminal device from the panels in a space division multiplexing (SDM) or frequency division multiplexing (FDM) transmission scheme; or
in response to the PUSCH being scheduled based on multi-DCI, determining a reference format of the virtual PHR based on transmission manners of different panels when two PUSCHs are transmitted by the terminal device from the panels in an SDM or FDM or time division multiplexing (TDM) transmission scheme.

15. The method according to any one of claims 9 to 14, further comprising:
transmitting indication information to the terminal device, wherein the indication information is used to indicate a PHR reporting manner.

16. The method according to claim 15, wherein the PHR reporting manner comprises any of the following:
reporting one PHR, reporting two PHRs, reporting three PHRs, reporting four PHRs, or reporting five PHRs.

17. A communication device, applied to a terminal device with a plurality of panels, comprising:
a processing module, configured to: in response to the terminal device configuring multiple transmission and reception point (multi-TRP) based uplink simultaneous multi-panel transmission (STxMP) for a physical uplink shared channel (PUSCH) on a first transmission slot corresponding to the PUSCH carrying a medium access control control element (MAC CE) PHR report, or on a slot meeting a timeline requirement, and an actual PUSCH transmission being a transmission from a single panel towards a single TRP, calculate at least one actual power headroom (PH) and report a power headroom report (PHR) based on a maximum power configuration of the terminal device.

18. A communication device, applied to a network device, comprising:
a processing module, configured to: in response to a terminal device configuring multiple transmission and reception point (multi-TRP) based uplink simultaneous multi-panel transmission (STxMP) for a physical uplink shared channel (PUSCH) on a first transmission slot corresponding to the PUSCH carrying a medium access control control element (MAC CE) PHR report, or on a slot meeting a timeline requirement, and an actual PUSCH transmission being a transmission from a single panel towards a single TRP, determine that a power headroom report (PHR) reported by the terminal device is calculated based on a maximum power configuration of the terminal device and at least one actual power headroom (PH).

19. A communication device, comprising a processor and a memory, wherein the memory is configured to store a computer program, and the processor is configured to execute the computer program stored in the memory to cause the device to execute the method according to any one of claims 1 to 8, or to execute the method according to any one of claims 9 to 16.

20. A computer-readable storage medium, configured to store instructions that, when executed, cause the method according to any one of claims 1 to 8 or the method according to any one of claims 9 to 16 to be implemented.
